(19) **Europäisches Patentamt**

**European Patent Office**

**Office européen des brevets**

(11) **EP 1 076 375 B1**

(12) **EUROPÄISCHE PATENTSCHRIFT**

(45) Veröffentlichungstag und Bekanntmachung des Hinweises auf die Patenterteilung:
**26.11.2003 Patentblatt 2003/48**

(51) Int Cl.⁷: **H01Q 1/12**, H04B 7/08

(21) Anmeldenummer: **00115393.1**

(22) Anmeldetag: **17.07.2000**

(54) **Diversityantenne für eine Diversityanlage in einem Fahrzeug**

Diversity antenna for a diversity system in a vehicle

Antenne en diversité pour un système de diversité dans un véhicule

(84) Benannte Vertragsstaaten:
**AT BE CH CY DE DK ES FI FR GB GR IE IT LI LU MC NL PT SE**

(30) Priorität: **11.08.1999 DE 19938020**

(43) Veröffentlichungstag der Anmeldung:
**14.02.2001 Patentblatt 2001/07**

(73) Patentinhaber: **FUBA Automotive GmbH & Co. KG 31162 Bad Salzdetfurth (DE)**

(72) Erfinder:
• **Lindenmeier, Heinz**
  **82152 Planegg (DE)**
• **Hopf, Jochen**
  **85540 Haar (DE)**
• **Reiter, Leopold**
  **82205 Gilching (DE)**
• **Kronberger, Rainer**
  **85635 Höhenkirchen (DE)**

(56) Entgegenhaltungen:
**JP-A- 2 062 131        JP-A- 8 107 306
US-A- 4 914 446**

**Beschreibung**

Die Erfindung bezieht sich auf eine Diversity-Antenne in Kraftfahrzeugen im Meter- und Dezimeterwellenbereich z. B. für den Hör- bzw. Fernsehrundfunkempfang. Sie geht aus von einem Mehrantennensystem, wie es für die Gestaltung eines Antennen-Diversitysystems verwendet wird. Solche Mehrantennensysteme sind z. B. beschrieben in EP 0 269 723, DE 36 18 452, DE 39 14 424, Fig.14, DE 37 19 692, P 36 19 704 und können unterschiedliche Antennenarten, wie Stabantennen, Windschutzscheibenantennen o.ä. verwenden. Bei hinreichender HF-mäßiger Entkopplung der Antennen treten Empfangsstörungen, welche im Zusammenhang mit zeitlichen Pegeleinbrüchen aufgrund der Mehrwegeausbreitung der elektromagnetischen Wellen erfolgen, bei unterschiedlicher Positionierung des Fahrzeugs im Empfangsfeld auf. Dieser Effekt ist beispielhaft anhand der Figuren 3 und 4 in EP 0 269 723 erläutert. Die Wirkungsweise eines Antennen-Diversitysystems besteht darin, bei Auftreten einer Empfangsstörung im Signal der aufgeschalteten Antenne auf eine andere Antenne umzuschalten und in einem vorgegebenen Empfangsfeld die Zahl der zu Empfangsstörungen führenden Pegelunterschreitungen am Empfängereingang so klein wie möglich zu gestalten.

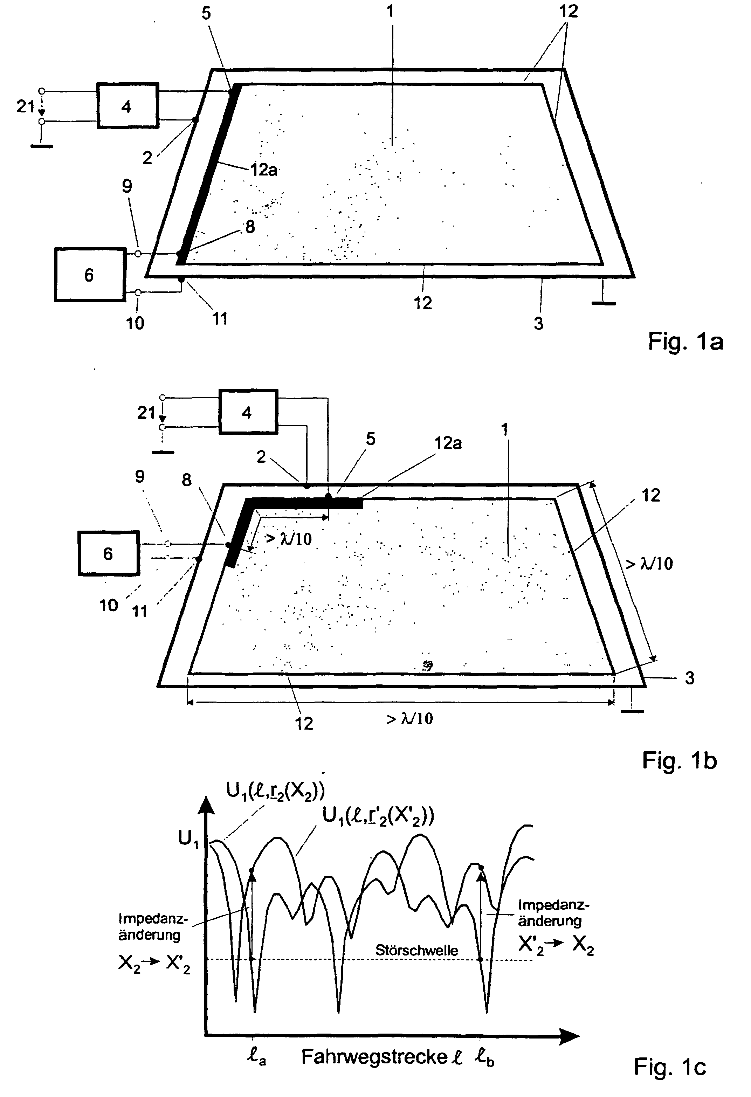

Die Pegeleinbrüche, aufgetragen über der Fahrstrecke und somit auch über der Zeit, treten nicht deckungsgleich auf (siehe Fig. 1c). Die Wahrscheinlichkeit, ein ungestörtes Signal unter den verfügbaren Antennen zu finden, wächst mit der Anzahl der Antennen und der diversitätsmäßigen Entkopplung zwischen den Signalen dieser Antennen. Eine diversitätsmäßige Entkopplung der Antennensignale im Sinne der vorliegenden Erfindung liegt vor, wenn die Empfangssignale, insbesondere im Hinblick auf Empfangsstörungen, wie z. B. Einbrüche des HF-Pegels, unterschiedlich sind.

Die vorliegende Erfindung geht aus von der EP 0 269 723. Hierin wird für die Gewinnung diversitätsmäßig entkoppelter Antennensignale die Anwendung von mindestens zwei Antennen gefordert, die aus einem Heizfeld eines Kraftfahrzeugs zu gestalten sind. Hierzu ist für jede Antenne ein Anschlußnetzwerk - und aus Gründen guter Signal/ Rauschverhältnisse - mit einem Antennenverstärker vorzusehen. Solche Anschlußnetzwerke sind in der Vielzahl sehr aufwendig insbesondere zusammen mit den jeweils notwendigen Hochfrequenz-Verbindungsleitungen zum Empfänger.

Vielfach werden nach dem Stand der Technik, z. B. für den Empfang des UKW-Rundfunks, vier Antennenverstärker am Rande einer Heckfensterscheibe eingesetzt, deren Verkabelung mit einem erheblichen Aufwand verbunden ist und auch beim Fahrzeugbau häufig als umständlich gilt.

Der Erfindung liegt die Aufgabe zugrunde, eine Diversityantenne für eine Diversityantennenanlage in einem Fahrzeug nach dem Oberbegriff des Anspruchs 1 mit unterschiedlich anwählbaren Empfangssignalen, jedoch zunächst mit nur einem Antennenanschluß auszubilden, wobei die mittlere Empfangsqualität möglichst gut ist und die in den unterschiedlichen Antennensignalen während der Fahrt gleichzeitig auftretenden Empfangsstörungen ähnlich gering sind, wie mit getrennten Antennen.

Diese Aufgabe wird erfindungsgemäß bei einer Diversityantenne für eine Diversityantennenanlage nach dem Oberbegriff des Anspruchs 1 durch die kennzeichnenden Merkmale des Anspruchs 1 gelöst.

Erfindungsgemäße Ausführungsbeispiele sind in den angegebenen Zeichnungen dargestellt und werden im folgenden näher beschrieben. Im einzelnen zeigt:

Fig. 1a: Diversityantenne für eine Diversityantennenanlage in einem Kraftfahrzeug nach der Erfindung, bestehend aus einem Anschlußnetzwerk 4 und einem elektronisch steuerbaren Impedanznetzwerk 6, angeschlossen an einen niederohmigen Verkopplungsleiter 12a an einer leitenden Fläche 1 auf der Heckscheibe.

Fig. 1b: Diversityantenne nach der Erfindung mit niederohmigem Verkopplungsleiter 12a mit laufender Mindestlänge von λ/10 und Mindestabstand von λ/10 zwischen dem Impedanzanschlußpunkt 8 und dem Antennenanschlußpunkt 5.

Fig. 1c: Fahrwegabhängige Empfangsspannung am Antennenanschlußpunkt 5 bei unterschiedlicher Einstellung des elektronisch steuerbaren Impedanznetzwerks 6 am Impedanzanschlußpunkt 8.

Fig. 2: Diversityantenne nach der Erfindung mit umlaufendem niederohmigen Verkopplungsleiter 12a und vier Impedanzanschlußpunkten 8 an den Ecken 7 und dem Antennenanschlußpunkt 5 auf der oberen horziontalen Seite an der leitenden Fläche 1.

Fig. 3a,b: Glasscheibe mit aufgebrachter leitender Beschichtung 13 als leitende Fläche 1, bzw. Verbundglasscheibe mit eingebetteter leitender Fläche 1.

Fig. 4: Niederohmiger Verkopplungsleiter 12a realisiert durch streifenförmige Elektrode 43 mit hochfrequent niederohmigem Kontakt zur leitenden Fläche 1.

Fig. 5: Leitende Fläche 1 der Antenne, gebildet durch die Leiteranordnung einer Heckscheibenheizung eines PKW. Die niederohmigen Verkopplungsleiter 12a gehen hierbei aus den stirnseitig angeordneten Sammelschienen 14 für die Heizstromzuführung hervor, die jeweils oberen und unteren Heizleiter 15 des Heizfeldes 20 wirken hierbei als induktiv hochohmige Randleiter 12b. Die elektronisch steuerbaren Impedanzanschlußnetzwerke 6 besitzen einen bzw. mehrere Steuereingänge 22 zur Einstellung diskreter Impedanzwerte.

Fig. 6: Niederohmiger Verkopplungsleiter 12a als unterer Randleiter der leitenden Fläche 1. Zur Vermeidung eines Kurzschlusses zwischen den Sammelschienen 14 der Heckscheiben-Heizung ist eine galvanische Gleichstromauftrennung 42 erforderlich

Fig. 7: Heizfeld 20 mit HF-Ströme sperrenden Zuführungsnetzwerken 18 an den Sammelschienen 14. Der niederohmige Verkopplungsleiter 12a mit Antennenanschlußpunkt 5 ist hierbei durch mehrere kurze an die unteren beiden Heizleiter 15 galvanisch bzw. kapazitiv angekoppelte Leiter 16 quer zur Flußrichtung des Heizstromes 17 gestaltet.

Fig. 8: Wie Fig. 7, jedoch mit unmittelbarer galvanischer Anbindung der Heizstromzuführungsleitung an der Sammelschiene 14b zur Fahrzeugmasse 3.

Fig. 9: Heizfeld mit galvanisch voneinander getrennten Teilheizfeldern oben und unten, die über hochfrequent leitende Zweipole 19 (z. B. einer hinreichend großen Kapazität) an den Trennstellen der Sammelschienen 14 zur Bildung einer möglichst großen zusammenhängenden wirksamen leitenden Fläche 1 zusammengeschaltet sind. Die an den beiden Anschlußnetzwerken 4 verfügbaren Antennensignale 21 werden über einen Diversityumschalter 54 einem Empfänger 30 zugeleitet.

Fig. 10: Anstelle des hochfrequent leitenden Zweipols 19 in Fig. 9 wird ein weiteres Impedanznetzwerk 6 mit Steuereingang 22 zwischen oberer und unterer Sammelschiene 14 geschaltet.

Fig. 11a: Elektronisch steuerbares Impedanznetzwerk 6 mit HF-Anschlüssen 9 und 10. Die wirksame Impedanz $\underline{Z}$ zwischen diesen beiden Anschlüssen wird durch das elektronische Schaltelement 24 durch ein Steuersignal 23 am Steuertor 22 aufgeschaltet.

Fig. 11b: Elektronisch steuerbares Impedanznetzwerk mit 2 Steuertoren 22 und mit HF-Schaltdioden als elektronische Schaltelemente 24. Damit können 3 unterschiedliche Impedanzwerte eingestellt werden.

Fig. 12a: Diversityempfangsanlage mit einem Diversityprozessor 31 und einer Schalteinrichtung 29, welche über die Steuerleitungen 34 die Steuertore 22 der elektronisch steuerbaren Impedanznetzwerke 6 ansteuert.

Fig. 12b: Diversityempfangsanlage mit einem Diversityprozessor 31 und einer Schalteinrichtung 29, welche über die Steuerleitungen 34 die Steuertore 22 der elektronisch steuerbaren Impedanznetzwerke 6 ansteuert und zusätzlich über Schaltsignale 33 ein digital schaltbares Anpaßnetzwerk 26 im Anschlußnetzwerk 4 ansteuert.

Fig. 13: Diversityantenne nach der Erfindung mit zusätzlichem AM-Antennenleiter 35 zum Empfang von AM-Rundfunksignalen, der sich oberhalb der leitenden Fläche 1 bzw. des Heizfeldes 20 befindet. Der hierzu erforderliche AM-Verstärker 36 befindet sich im Anschlußnetzwerk 4.

Fig. 14: Wie Fig. 13, jedoch mit einem weiteren elektronisch steuerbaren Impedanznetzwerk 6 im unteren mittleren Drittel der Längsausdehnung der leitenden Fläche 1 in hinreichend großem Abstand vom ersten elektronisch steuerbaren Impedanznetzwerk 6.

Fig. 15: Auf die Glasoberfläche aufgebrachter streifenförmiger Leiter 38, welcher aufgrund seiner Abmessungen und seiner Lage zum benachbarten Karosserierand eine hinreichend große Kapazität bildet, so daß der Fahrzeugmasseanschlußpunkt 2 für das Antennennetzwerk 4 bzw. der Fahrzeugmassepunkt 11 für das elektronisch steuerbare Impedanznetzwerk 6 eine kapazitive Masseanbindung an die Fahrzeugmasse 3 erhalten. Die Steuerleitungen 34 zum elektronisch steuerbaren Impedanznetzwerk 6 sind ebenfalls als aufgedruckte Leiter ausgeführt.

Fig. 16: Zur Erzeugung der Steuersignale 23 in Form eines geträgerten digitalen Adreßsignals ist im Anschlußnetzwerk 4 ein Codegenerator implementiert, welches in der im elektronisch steuerbaren Impedanznetzwerk 6 enthaltenen Dekodierschaltung 40 die für die Einstellung der elektronischen Schaltelemente 24 notwendigen Signale enthält.

Fig. 17: Erzeugung einer Versorgungswechselspannung 47 mittels eines im Anschlußnetzwerk 4 enthaltenen Wechselrichters 45, welche über die Stromversorgungsleitung 44 dem elektronisch steuerbaren Impedanznetzwerk 6 zugeführt wird, dort mittels eines Gleichrichters 46 gleichgerichtet wird und als Versorgungsgleichspannung 48 im elektronisch steuerbaren Impedanznetzwerk 6 zur Verfügung steht.

Fig. 18: Ein einzelner auf die Fensterscheibe 39 gedruckter Leiter dient sowohl als Steuerleitung 34 als auch als Stromversorgungsleitung 44 für das elektronisch steuerbare Impedanznetzwerk 6, der die Steuersignale 23 des Codegenerators 41 im Anschlußnetzwerk 4 dem elektronisch steuerbaren Impedanznetzwerk 6 zuführt und dort über ein Filter 49 der Dekodierschaltung 40 zugeleitet werden. Die Stromversorgung des elektronisch steuerbaren Impedanznetzwerks 6 erfolgt wie in Fig. 17.

Fig. 19: Prinzipdarstellung eines über den Impedanzanschlußpunkt 8 und einem benachbarten Fahrzeugmassepunkt 11 an die leitende Fläche 1 angeschlossenen elektronisch steuerbaren Impedanznetzwerks 6, dem die Steuersignale 23 über eine Steuerleitung 34 zugeführt sind. Die Stromversorgung des elektronisch steuerbaren Impedanznetzwerks 6 erfolgt über eine Stromversorgungsleitung 44 in Form einer Versorgungswechselspannung 47.

Fig. 20: Räumliche Trennung des elektronisch steuerbaren Impedanznetzwerks 6 über eine Hochfrequenzleitung 51 zum Impedanzanschlußpunkt 8, welcher mit einem vertikalen Leiter 53, der die im wesentlichen horizontal verlaufenden heizenden Leiterteile 15 schneidet, verbunden ist. Der horizontal verlaufende niederohmige Verbindungsleiter 12a ist über eine Gleichstromauftrennung 42 mit dem als Sammelschiene 14 ausgeführten niederohmigen Verbindungsleiter 12a an das Anschlußnetzwerk 4 angeschlossen.

Fig. 21: Wie Fig. 20, wobei die Hochfrequenzleitung 51 als gedruckter Leiter 52 in der Nähe der Fahrzeugmasse 3 als unsymmetrische koplanare HF-Leitung ausgeführt ist und die Gleichstromauftrennung 42 im Gehäuse des elektronisch steuerbaren Impedanznetzwerks 6 implementiert ist und die Ansteuerung und Stromversorgung der elektronisch steuerbaren Impedanznetzwerke 6 wie in Fig. 19 erfolgt.

Die grundsätzliche Wirkungsweise der Erfindung soll anhand eines vereinfachten Modells verständlich gemacht werden. Fig. 1a zeigt hierzu beispielhaft eine einfache Anordnung für eine Diversityantenne nach der Erfindung. Der niederohmige Verkopplungsleiter 12a sei mit einer homogen leitenden Fläche 1 verbunden, deren Oberflächenwiderstand aufgrund ihrer vorzugsweise kapazitiven Wirkung bis zu ca. 50 Ω betragen kann. An einem Ende des niederohmigen Verkopplungsleiters 12a ist der Antennenanschlußpunkt 5 mit Fahrzeugmasseanschlußpunkt 2, im folgenden mit Tor 1 bezeichnet, ausgebildet. Am anderen Ende des niederohmigen Verkopplungsleiters 12a ist der Impedanzanschlußpunkt 8 mit benachbartem Fahrzeugmassepunkt 11, im folgenden mit Tor 2 bezeichnet, ausgebildet. Aufgrund der im Vergleich zur Wellenlänge wirksamen Abmessung des niederohmigen Verkopplungsleiters 12a mit einer Mindestlänge von $\lambda/10$ sowie der leitenden Fläche 1 bilden sich bei Einfall einer Vielzahl elektromagnetischer Wellen im statistischen Wellenfeld an den beiden Toren bei einer vorgegebenen Impedanzbelastung jeweils dann unterschiedliche Signalpegel aus, wenn die Tore in einem hinreichend großen Abstand im Vergleich zur Wellenlänge gestaltet sind. Dies wird im folgenden näher betrachtet.

Bedient man sich zur Beschreibung der Antenne der Wellenparameter und beschreibt mit $\underline{S}_{11}$ bzw. $\underline{S}_{22}$ die Eingangsreflexionsfaktoren an den Toren 1 bzw. 2 und mit $\underline{S}_{12}$ die Verkopplung dieser Tore und schreibt man ferner einer aus der azimutalen Richtung $\varphi_v$ mit der komplexen Amplitude $\underline{W}_v$ einfallenden $v$-ten Welle, von einem fiktiven Tor 3 ausgehend, am Tor 1 den komplexen Spannungsbeitrag $\underline{U}_v \, {}^*\underline{S}_{13}(\varphi_v)$ und ihren Spannungsbeitrag am Tor 2 entsprechend mit $\underline{U}_v{}^*\underline{S}_{23}(\varphi_v)$ zu, so läßt sich bei vorgegebenen Impedanzabschlüssen der Tore 1 und 2 die Empfangsspannung an den Toren an einem Ort angeben. Unter der Annahme der Überlagerung von N solcher Wellen mit statistisch verteilten komplexen Amplituden, welche unter statistisch verteilten azimutalen Winkeln $\varphi_v$ einfallen, und unter der vereinfachenden Voraussetzung eines reflexionsfreien Abschlusses des Tores 1 mit $r_1 = 0$ und des Abschlusses des Tores 2 mit dem Reflexionsfaktor $\underline{r}_2(\underline{Z}_2)$, so läßt sich die am Tor 1 entstehende Emfangsspannung $\underline{U}_l(l)$ über der Fahrwegstrecke 1 ausdrücken. Mit der vereinfachenden Voraussetzung eines reflexionsfreien Abschlusses ($\underline{r}_1=0$) am Tor 1, z. B. durch Abschluß mit einem Anschlußnetzwerk 4, dessen Eingangswiderstand dem Bezugswiderstand des Wellenparametersystems entspricht, läßt sich die Empfangsspannung $\underline{U}_l(l)$ am Anschlußnetzwerk 4, wie folgt, über der Fahrwegstrecke I darstellen:

$$\underline{U}_1 = \sum_{v=1}^{N} U_v \cdot e^{j(\psi_v + 2\pi\ell/\lambda \cdot \cos\varphi_v)} \cdot \underline{S}_{13}(\varphi_v) \; + \; \frac{\underline{S}_{12} \cdot \underline{r}_2(\underline{Z}_2)}{1 - \underline{S}_{22} \cdot \underline{r}_2(\underline{Z}_2)} \cdot \sum_{v=1}^{N} U_v \cdot e^{j(\psi_v + 2\pi\ell/\lambda \cdot \cos\varphi_v)} \cdot \underline{S}_{23}(\varphi_v) \qquad (1)$$

$$\underbrace{\phantom{xxxxxxxxxxxxxxxxxxxxxxxxxxx}}_{\underline{U}_I(l)} \qquad\qquad \underbrace{\phantom{xxxxxxxxxxxxxxxxxxx}}_{\underline{U}_{II}(l)}$$

Hierin bezeichnen die Summenausdrücke $\underline{U}_I(l)$ und $\underline{U}_{II}(l)$ komplexe, am Tor 1 wirksame Spannungsbeiträge, welche sich längs der Fahrwegstrecke l stark ändern und aufgrund der statistischen Gesetzmäßigkeit jeweils die bekannten Pegeleinbrüche besitzen, welche nur bei hinreichendem Unterschied zwischen $\underline{S}_{13}(\varphi_v)$ und $\underline{S}_{23}(\varphi_v)$ nicht am gleichen Ort auftreten. Dieser Unterschied wird in der vorliegenden Erfindung durch die Forderung eines hinreichend großen Abstands A zwischen den beiden Toren von mindestens $\lambda/10$ erreicht. Setzt man zur Erleichterung des Verständnisses den für das Wesen der Erfindung nicht erforderlichen Eingangsreflexionsfaktor $\underline{S}_{22} = 0$ voraus, so ergibt sich aus der obigen Beziehung eine einfachere Darstellung des Spannungspegels am Tor 1:

$$\underline{U}_1(\ell, \underline{r}_2) = \underline{U}_I(\ell) + \underline{S}_{12}(A) \cdot \underline{r}_2(\underline{Z}_2) \cdot \underline{U}_{II}(\ell) \qquad (2)$$

Diese Darstellung zeigt deutlich, daß die Empfangsspannung $\underline{U}_1(l, \underline{r}_2)$ nur dann von Null verschieden sein kann, wenn $\underline{U}_I(l)$ und $\underline{U}_{II}(l)$ nicht an der gleichen Fahrwegstelle Null sind oder einen Pegeleinbruch besitzen. Dies bedingt die Forderung nach einer hinreichenden Unterschiedlichkeit von $\underline{S}_{13}(\varphi_v)$ und $\underline{S}_{23}(\varphi_v)$. Der Verkopplungsparameter $\underline{S}_{12}$ ist durch die Wahl der Tore 1 und 2 und durch den Verkopplungsleiter 12a festgelegt. Der Reflexionsfaktor $\underline{r}_2(\underline{Z}_2)$ hingegen kann innerhalb der komplexen Ebene alle Werte durch Anschalten unterschiedlicher Impedanzen $\underline{Z}_2$ innerhalb des Einheitskreises annehmen. Im Interesse einer hohen Empfangsleistung sind deshalb Blindwiderstandswerte $\underline{Z}_2 = jX_2$ mit $|\underline{r}_2| = 1$ zu bevorzugen. Ergibt sich für $\underline{U}_I(l)$ bei Abschluß von Tor 2 mit einem bestimmten Wert $X_2$ ein Pegeleinbruch, wie es in Fig. 1c dargestellt ist, dann kann dieser Mangel durch Umschalten der Impedanz $\underline{Z}_2$ auf einen anderen geeigneten Wert $X_2'$ beseitigt werden, wenn der Betrag des Verkopplungsparameters $\underline{S}_{12}$ hinreichend groß ist. Die ausreichende Verkopplung wird in der vorliegenden Erfindung durch den Verkopplungsleiter 12a erzielt. Ist die Verkopplung zu klein, dann ist der vom Ausdruck $\underline{U}_{II}(l)$ herrührende Beitrag in der Empfangsspannung zu klein und der Pegeleinbruch wird bei Umschaltung von $X_2$ auf $X_2'$ auch bei optimaler Wahl dieser Blindwiderstände nur mangelhaft behoben, so daß sich die gewünschte diversitätsmäßige Entkopplung der beiden Antennensignale nicht erreichen läßt.

Die Darstellung in Fig. 1c läßt beispielhaft die grundsätzliche Wirkungsweise einer Diversityantennenanlage mit einer Antenne nach der Erfindung erkennen. Ist für $l < l_a$ zunächst der Signalpegel $U_1(l, \underline{r}_2(X_2))$ im Empfänger wirksam, so wird der Diversityprozessor bei Unterschreiten der Störschwelle an der Fahrwegstelle $l_a$ am Tor 2 eine geänderte Impedanz $\underline{Z}_2 = j\,X'_2$ anschalten mit entsprechend geändertem Reflexionsfaktor $\underline{r}'_2(X_2')$. Nach Umschaltung ist somit das Signal $U_1(l, \underline{r}'_2(X_2'))$ im Empfänger solange wirksam, bis an der Fahrzeugstelle $l_b$ eine erneute Umschaltung auf den ursprünglichen Impedanzwert $\underline{Z}_2 = jX_2$ mit dem Signalpegel $U_1(l, \underline{r}_2(X_2))$ erfolgt etc.. Die leitende Fläche im Sinne der vorliegenden Erfindung ist gebildet aus einer im wesentlichen homogen leitfähigen Schicht oder aus einer Netz- bzw. Gitterstruktur aus diskreten drahtförmigen Leitern oder aus mehreren Teilbereichen derart gebildeter leitender Flächen, welche jedoch zumindest durch Randleiter 12, welche die gesamte leitende Fläche 1 umlaufen, hochfrequent leitend miteinander verbunden sind und somit eine zusammenhängende hochfrequent hinreichend leitfähige Fläche 1 bilden. Diese ist - den üblichen Fensterformen entsprechend - im wesentlichen rechteckig bzw. trapezförmig gestaltet. Um die mit der Erfindung vorliegende Aufgabe zu lösen, ist für die leitende Fläche 1 eine gewisse Mindestgröße zu fordern derart, daß keine ihrer Seiten bei der Empfangsfrequenz eine geringere Länge als $\lambda/10$ haben sollte. Aufgrund der überwiegend kapazitiven Wirkung der leitenden Fläche 1 ist hierbei eine Niederohmigkeit im Sinne üblicher Hochfrequenzleiter nicht zwingend erforderlich, sondern es genügt, wenn der Oberflächenwiderstand einer homogen leitenden Schicht den Wert von $10\,\Omega$ nicht wesentlich überschreitet. Im Falle einer aus diskreten drahtförmigen Leitern, wie sie z.B. aus Heizdrähten in Verbundglasscheiben eingelegt sind bzw. als Heizleiter auf Rückfensterscheiben aufgedruckt sind, gebildeten leitenden Fläche 1 wird ebenfalls die nötige Leitfähigkeit im Sinne der Erfindung erreicht. Die Randleiter 12 im Sinne der Erfindung bilden somit die äußere Berandung der leitenden Fläche 1 aus entweder dünnen drahtförmigen Leitern als induktiv hochohmiger Randleiter 12b oder können bei einer aus einer homogenen, leitenden transparenten Schicht gebildeten leitende Fläche 1 durch deren Rand gegeben sein ohne gesondert ausgebildet zu sein. Um bei einer leitende Fläche 1 dieser Art die notwendige Verkopplung zwischen den Toren 1 und 2 herzustellen, wird erfindungsgemäß ein Teil der Randleiter 12 als niederohmige Verkopplungsleiter 12a gestaltet. Um die induktiv hochohmige Wirkung dünner drahtförmiger Leiter zu vermeiden, kann der Randleiter deshalb als flächiger streifenförmiger und auf der Scheibe angebrachter Leiter von mindestens ca. 5mm Breite gestaltet werden. Im Falle eines im Querschnitt runden induktiv hochohmigen Randleiters 12b sollte dieser einen Durchmesser von ca. 4mm nicht unterschreiten. Bei der Gestaltung des niederohmigen Verkopplungsleiters 12a am Rande der leitenden Fläche 1 zeigt sich, daß diese nicht auf die Geradlinigkeit beschränkt ist, sondern lediglich, daß die laufende Länge des niederohmigen Verkopplungsleiters 12a erfindungsgemäß das Mindestmaß von $\lambda/10$ nicht unterschreiten soll. Dies ist beispielhaft in Fig. 1b mit einem um die Ecke der leitenden Fläche 1 verlaufenden niederohmigen Verkopplungsleiter 12a dargestellt.

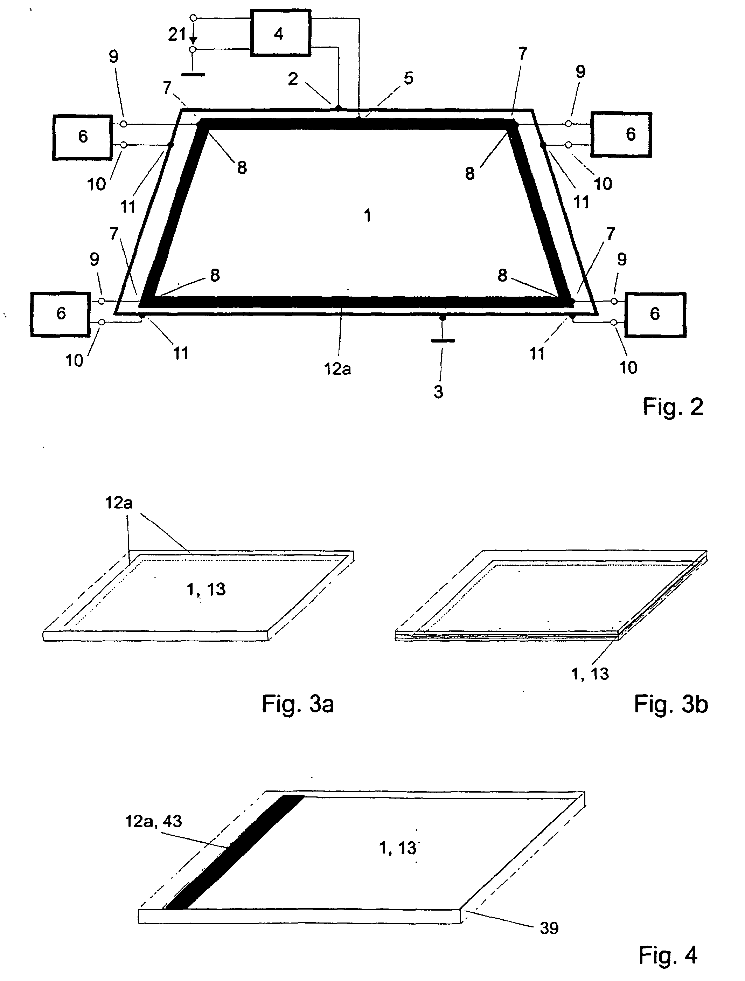

In einer vorteilhaften Ausgestaltung der Erfindung ist die leitende Fläche 1, wie in Fig. 2 dargestellt, vollständig von einem miteinander verbundenen, niederohmigen Verkopplungsleiter 12a umgeben und mit bis zu vier elektronisch steuerbaren Impedanznetzwerken 6 beschaltet. Diese sind vorzugsweise unmittelbar in der Nähe eines der Eckpunkte 7 der leitenden Fläche 1 angebracht, wo sie einerseits mit dem Impedanzanschlußpunkt 8 auf dem niederohmigen Verkopplungsleiter 12a verbunden und andererseits mit dem Fahrzeugmasseanschlußpunkt 2 verbunden sind. Bei einer leitenden Fläche 1 der dargestellten Art lassen sich bei dieser Anbringung der elektronisch steuerbaren Impedanznetzwerke 6 eine besondere Vielzahl von Antennensignalen 21, im folgenden mit Diversityeffizienz bezeichnet, erzielen.

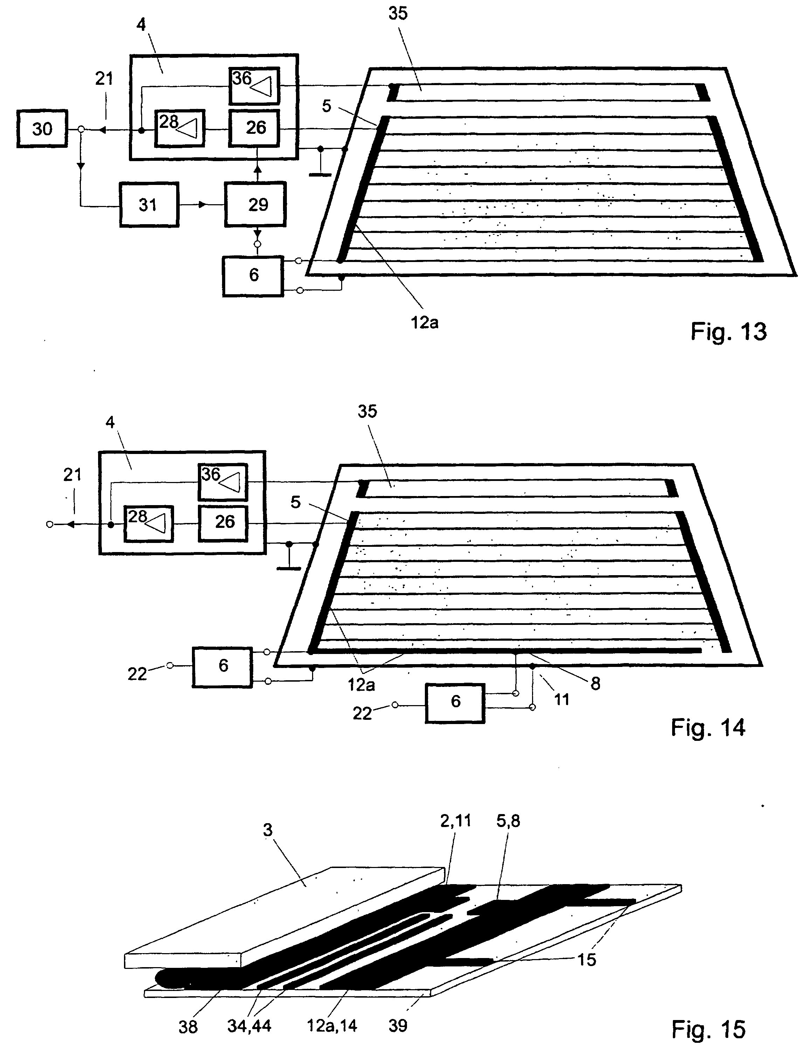

Besonders vorteilhaft ist die Anwendung der Erfindung auf ein Heizfeld 20, das auf der Rückfensterscheibe oder der Frontfensterscheibe eines Kraftfahrzeugs angebracht ist, wie es beispielhaft in Fig. 1a dargestellt ist. In einem solchen Fall lassen sich die Sammelschienen 14 des Heizfeldes als niederohmiger Verkopplungsleiter 12a verwenden. Bei den üblichen Fahrzeugabmessungen beträgt die Länge einer vertikal orientierten Sammelschiene 14 zwischen 30 cm und 80 cm. Im Frequenzbereich des UKW-Rundfunks entspricht dies einer relativen Wellenlänge von 1/10 bis ¼. Somit kann die Sammelschiene 14 einen niederohmigen Verkopplungsleiter 12a im Sinne der vorliegenden Erfindung bilden. Eine weitere vorteilhafte Ausgestaltung der Erfindung besteht in der Verlängerung des niederohmigen Verkopplungsleiters 12a in Fig. 1a am unteren Rand der leitenden Fläche 1 bis hin zur horizontalen Mitte der Querabmessung der Fensterscheibe 39 und in der dortigen Anbringung eines elektronisch steuerbaren Impedanznetzwerks 6, wie es in Fig. 14 dargestellt ist. In diesem Fall beträgt der Abstand zwischen dem Anschlußnetzwerk 4 und dem in der horizontalen Mitte des Heizfeldes angeschlossenen elektronisch steuerbaren Impedanznetzwerks 6 im UKW-Bereich ¼ bis ½ der Wellenlänge.

Insbesondere für Frontfensterscheiben, welche mit einer die infrarote Transmission hemmenden leitenden Beschichtung 13 versehen sind, läßt sich diese als leitende Fläche 1 im Sinne der vorliegenden Erfindung ausgestalten. Solche Beschichtungen sind entweder auf der Glasoberfläche wie in Fig. 3a, oder im Verbundglas als Zwischenschicht wie in Fig. 3b, angebracht. Im Randbereich einer solchen gut leitenden Schicht wirkt erfindungsgemäß die Schicht selbst als niederohmiger Verkopplungsleiter 12a. In Fig. 4 ist die leitende Beschichtung aufgrund der geforderten Lichtdurchlässigkeit begrenzt leitfähig mit einem Oberflächenwiderstand von $3\,\Omega$ bis $10\,\Omega$. Für solche leitenden Flächen 1 wird der niederohmige Verkopplungsleiter 12a als streifenförmige Elektrode 43 mit hochfrequent niederohmigem Kontakt zur leitenden Fläche 1 ausgeführt. Die Ankopplung kann entweder galvanisch durch Berührung mit der leitenden Beschichtung 13 erfolgen oder als streifenförmige Elektrode 43, welche kapazitiv mit der leitenden Beschichtung 13 verbunden ist.

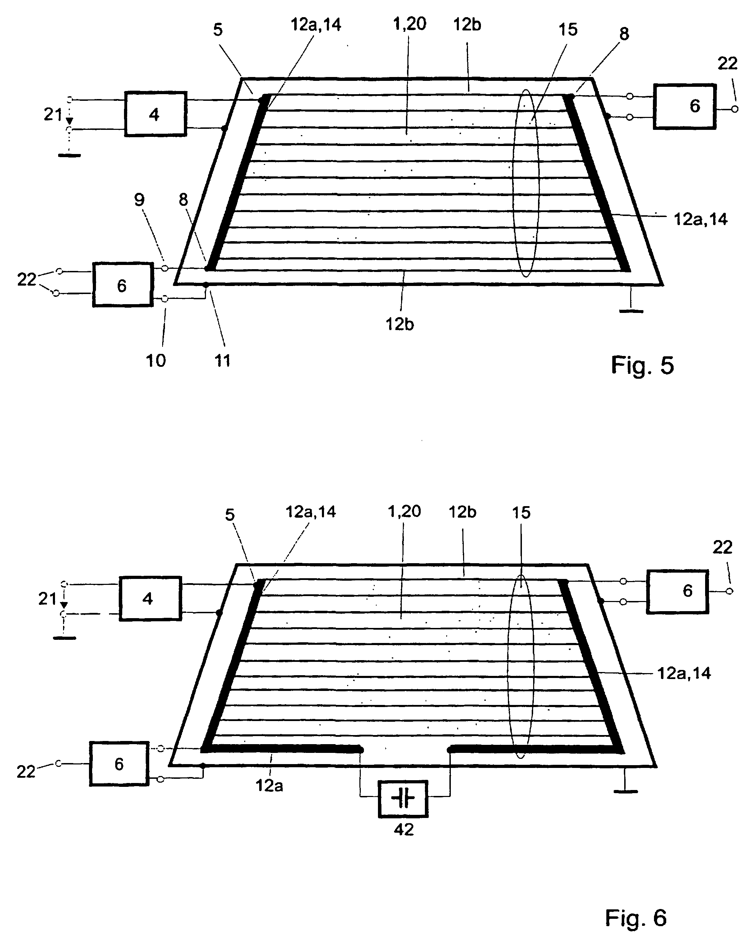

In Fig. 5 ist wie bereits erwähnt, die leitende Fläche 1 durch ein Heizfeld mit heizenden Leiterteilen 15 zwischen zwei Sammelschienen 14 gebildet. Neben dem am linken unteren Ende des Heizfeldes angeschlossenen elektronisch steuerbaren Impedanznetzwerks 6 ist ein ähnliches elektronisch steuerbares Impedanznetzwerk 6 am oberen rechten Rand der leitenden Fläche 1 angeschlossen. Aufgrund der induktiven Wirkung der heizenden Leiterteile 15 und der induktiv hochohmigen Randleiter 12b ist die durch die Beschaltung mit unterschiedlichen Impedanzen bewirkte diversitätsmäßige Unterschiedlichkeit der Antennensignale 21 stark eingeengt.

In einer weiteren Ausgestaltung der Erfindung wird deshalb, wie in Fig. 6, der niederohmige Verkopplungsleiter 12a am unteren Rand der leitenden Fläche 1 fortgesetzt und mit der Sammelschiene 14, die dem Anschlußnetzwerk 4 gegenüberliegt, hochfrequenzmäßig verbunden. Die hochfrequent niederohmige Gleichstromauftrennung 42 verhindert den Gleichstromkurzschluß. Hierdurch wird der Einfluß unterschiedlicher Impedanzen des elektronisch steuerbaren Impedanznetzwerks 6 auf der rechten Seite auf die vom Anschlußnetzwerk 4 abgegriffene Empfangsspannung wesentlich erhöht und es ergibt sich eine erhöhte Diversityeffizienz.

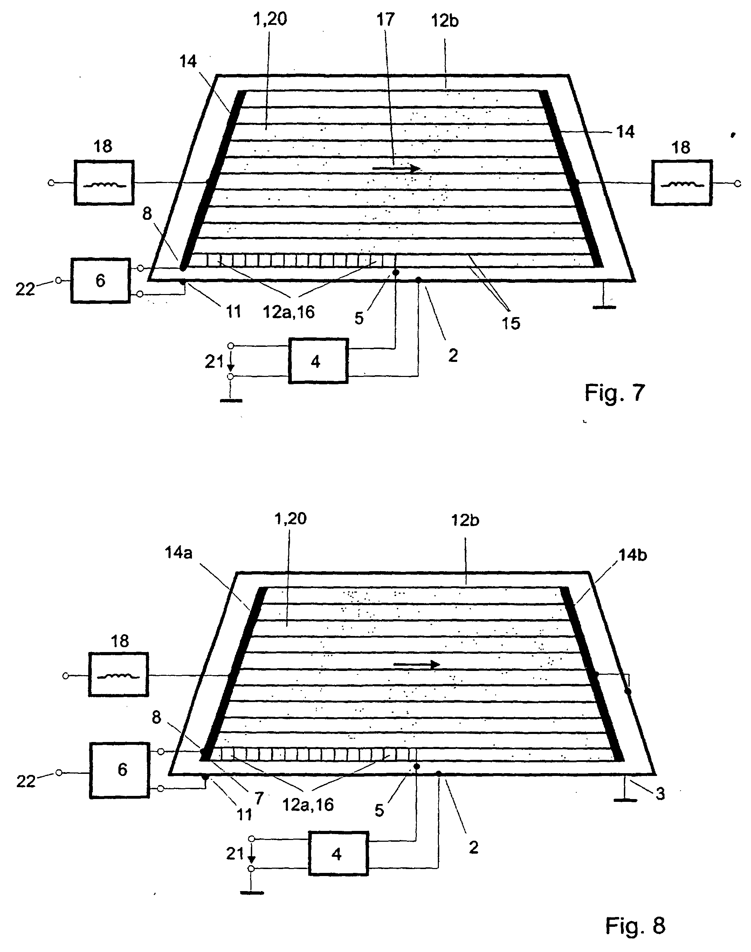

Zur Gestaltung eines niederohmigen Verkopplungsleiters 12a in einem Heizfeld mit einem induktiv hochohmigen Randleiter 12b werden wie in Fig. 7 in einer vorteilhaften Ausgestaltung der Erfindung senkrecht zur Flußrichtung des Heizgleichstroms 17 vertikale drahtförmige Leiter 16 zur hochfrequenten Verbindung zwischen zwei oder mehreren horizontalen heizenden Leiterteilen 15 angebracht. Die vertikalen drahtförmigen Leiter 16 führen bei Anbringung zwischen Punkten mit jeweils gleichen Heizspannungspotentialen nicht zu Ausgleichströmen und verändern somit die Heizwirkung der verbundenen heizenden Leiterteile 15 nicht. Hochfrequenzmäßig wirken die verbundenen heizenden Leiterteile 15 als niederohmiger Verkopplungsleiter 12a im Sinne der Erfindung. Die Verbindung der drahtförmigen zu heizenden Leiterteile 15 kann dabei entweder galvanisch oder kapazitiv erfolgen. In Fig. 7 erfolgt die Zuführung des Heizstroms an die Sammelschienen 14 durch HF-Ströme sperrende Zuführungsnetzwerke 18. In Fig. 8 erfolgt hingegen eine unmittelbar galvanische Anbindung der Heizstromzuführungsleitung an der Sammelschiene 14b an die Fahrzeugmasse 3.

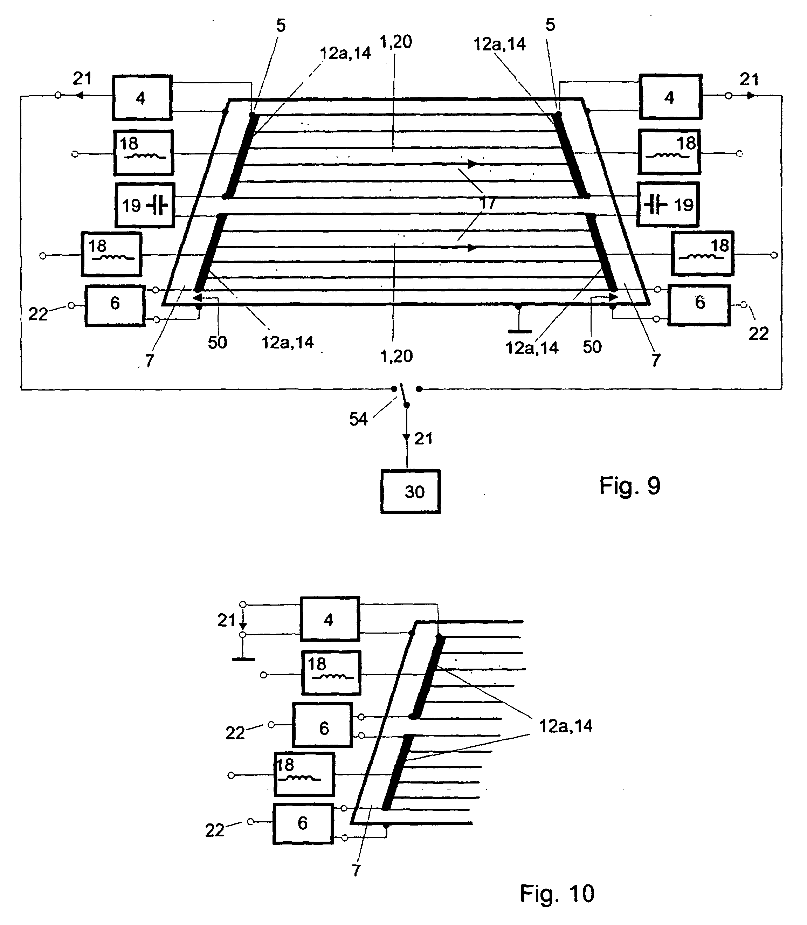

Geteilte Heizfelder sind häufig aus fahrzeugtechnischer Sicht gefordert. Zur Gestaltung einer möglichst großen hochfrequent wirksamen leitenden Fläche 1 können, wie in den Figuren 9 und 10 die jeweils übereinander benachbarten Sammelschienen 14 der Heizfelder 20 mit einem hochfrequent leitenden Zweipol 19 miteinander verbunden werden. In Fig. 9 ist die Kombination zweier Diversitysysteme nach der vorliegenden Erfindung mit geteilten Heizfeldern dargestellt. Mit Hilfe der hochfrequent leitenden Zweipole 19 wird somit auf der im wesentlichen vertikalen Berandung der leitenden Fläche 1 auf beiden Seiten ein durchgehender niederohmiger Verkopplungsleiter 12a gestaltet. Mit Hilfe der an den unteren Enden der niederohmigen Verkopplungsleiter 12a angebrachten elektronisch steuerbaren Impedanznetzwerke 6 werden jeweils insbesondere bezüglich der am oberen Ende des niederohmigen Verkopplungsleiters 12a angebrachten Anschlußnetzwerke 4 diversitätsmäßig unterschiedliche Antennensignale 21 gebildet. Die an den beiden Anschlußnetzwerken 4 verfügbaren Antennensignale 21 werden erfindungsgemäß über einen Diversityumschalter 54 einem Empfänger 30 zugeleitet. Die Diversitywirkung der Anlage besteht somit in der unterschiedlichen Impedanzbeschaltung in den elektronisch steuerbaren Impedanznetzwerken 6 im linken und rechten Eckpunkt 7 am unteren Rand der leitenden Fläche 1 sowie in den unterschiedlichen Schaltstellungen der wirksamen Impedanz 50. In einer weiteren vorteilhaften Ausgestaltung der Erfindung ist anstelle des hochfrequent leitenden Zweipols 19 in Fig. 9 ein elektronisch steuerbares Impedanznetzwerk 6 in Fig. 10 angebracht. Damit kann die Diversityeffizienz bezüglich des Antennensignals 21 durch verschiedene Impedanzen in den beiden die Sammelschienen 14 verbindenden Heizfeldern 20 durch die elektronisch steuerbaren Impedanznetzwerke 6 erheblich gesteigert werden.

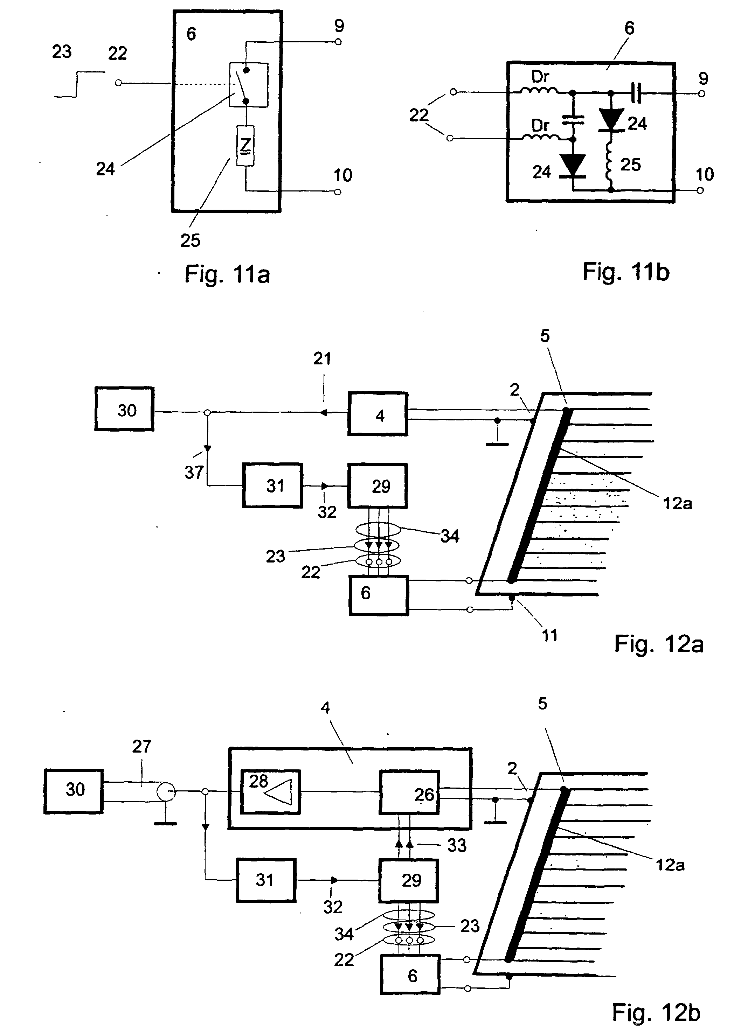

Erfindungsgemäß besitzt jedes elektronisch steuerbare Impedanznetzwerk 6 mindestens ein Steuertor 22 zur Einstellung des wirksamen Impedanzwerts $\underline{Z}$ zwischen dem ersten HF-Anschluß 9 und dem zweiten HF-Anschluß 10. Durch Anlegen unterschiedlicher Steuersignale 23 werden unterschiedliche Impedanzen $\underline{Z}$ wirksam und es ergeben sich über die Verkopplungswirkung des niederohmigen Verkopplungsleiters 12a diversitätsmäßig unterschiedliche Antennensignale 21 am Ausgang des Anschlußnetzwerks 4. Die Grundfunktion eines solchen elektronisch steuerbaren Impedanznetzwerks 6 ist in Fig. 11a durch ein elektronisches Schalterelement 24 und einer Impedanz $\underline{Z}$ 25 dargestellt. Eine beispielhafte Ausführungsform mit zwei digital einstellbaren elektronischen Schaltelementen 24 mit jeweils diskreten Schaltzuständen und einem Blindwiderstand 25 ist in Fig. 11b dargestellt. Mit Hilfe der beiden Steuertore 22 lassen sich mit einem Impedanznetzwerk 6 wie in Fig. 11b bei geeigneter Ansteuerung drei unterschiedliche Impedanzwerte einstellen. Wird ein weiteres elektronisch steuerbares Impedanznetzwerk 6, wie in Fig. 5 rechts oben, mit z.B nur zwei unterschiedlichen Schaltzuständen (hochohmige und niederohmige Impedanz $\underline{Z}$) eingesetzt, so lassen sich aufgrund der Wirkung des niederohmigen Verkopplungsleiters 12a vier verschiedene diversitätsmäßige Antennensignale 21 bilden. Die Diversityeffizienz läßt sich jedoch darüber hinaus noch einmal verbessern wenn, wie in Fig. 6, der niederohmige Verkopplungsleiter 12a bis zum zweiten elektronisch steuerbaren Impedanznetzwerk 6 geführt ist. Die eingestellten Kombinationen der Impedanzwerte lauten für das erste und zweite elektronisch steuerbare Impedanznetzwerk 6 beispielsweise wie folgt:

| Komb.Nr. | erstes Netzwerk | zweites Netzwerk |
|---|---|---|
| 1 | ca.50 Ω induktiv | hochohmig |
| 2 | hochohmig | hochohmig |
| 3 | hochohmig | niederohmig |
| 4 | niederohmig | niederohmig |

Eine Diversityantenne nach der Erfindung kann, wie beispielsweise in Fig. 12a gezeigt, in einer Diversityempfangsanlage mit einem Diversityprozessor 31 zur Erkennung und Anzeige von Empfangsstörungen im Antennensignal 21 bzw. in einem daraus abgeleiteten Empfangssignal 37 mit Hilfe eines Anzeigesignals 32 eingesetzt werden. Eine Schalteinrichtung 29, der das Anzeigesignal 32 zugeführt ist und an deren Ausgang die Steuersignale 23 gebildet sind, leitet diese über Steuerleitungen 34 an die elektronisch steuerbaren Impedanznetzwerke 6. Hierbei ist die Schalteinrichtung 29 derart gestaltet, daß bei Auftreten einer Empfangsstörung im Antennensignal 21 durch Umschaltung des Impedanzwerts mindestens eines der elektronisch steuerbaren Impedanznetzwerke 6 ein diversitätsmäßig unterschiedliches Antennensignal 21 am Ausgang des Anschlußnetzwerks 4 gebildet ist. Im Zusammenspiel mit dem Diversityprozessor 31 wird dadurch die Änderung des Antennensignals 21 solange fortgeführt, bis der Diversityprozessor 31 keine Störung anzeigt.

Infolge der starken Verkopplung zwischen dem Antennenanschlußpunkt 5 und dem Impedanzanschlußpunkt 8 ändert sich bei Anschluß unterschiedlicher Impedanzwerte im elektronisch steuerbaren Impedanznetzwerk 6 die Quellimpedanz, mit der das Anschlußnetzwerk 4 gespeist wird. In vorteilhafter Ausgestaltung der Erfindung wird, wie in Fig. 12b gezeigt, in das Anschlußnetzwerk 4 ein digital schaltbares Anpaßnetzwerk 26 eingebracht, welches jeweils eine Impedanzanpassung bei den verschiedenen Schaltzuständen der elektronisch steuerbaren Impedanznetzwerke 6 bewirkt. Diese Maßnahme hat keinen Einfluß auf die Richtwirkung der jeweils vom Diversityprozessor ausgewählten Antenne. Die Ansteuerung dieses digital schaltbaren Anpaßnetzwerks 26 erfolgt dabei vorzugsweise mit Hilfe einer Schalteinrichtung 29, welche die unterschiedlichen Schaltzustände sowohl im elektronisch steuerbaren Impedanznetzwerk 6 als auch im digital schaltbaren Anpaßnetzwerk 26 herstellt. Die Schalteinrichtung 29 wird dabei vorzugsweise vom Diversityprozessor 31 weiter geschaltet, wodurch entsprechende Steuersignale 23 über die Steuerleitung 34 zur Steuerung der elektronisch steuerbaren Impedanznetzwerke 6 bzw. Schaltsignale 33 zur Steuerung des digital schaltbaren Anpaßnetzwerks 26 gesendet werden.

Eine besonders wenig aufwändige und doch leistungsfähige AM/FM-Diversity-Antenne wird gemäß Fig. 13 dadurch erreicht, daß oberhalb der leitenden Fläche 1 ein AM-Antennenleiter 35 zum Empfang von AM-Rundfunksignalen eingebracht ist und im Anschlußnetzwerk 4 ein AM-Verstärker 36 mit kurzem Anschluß an den AM-Antennenleiter 35 vorhanden ist. Vorteilhafterweise sind AM- und FM-Verstärker in einem Anschlußnetzwerk 4 gemeinsam untergebracht. Ist nur ein Anschlußnetzwerk 4 am linken unteren Ende der leitenden Fläche 1 vorhanden, so läßt sich, wie oben beschrieben, ein effektives Diversityantennensystem mit drei diversitätsmäßig unterschiedlichen Antennensignalen 21 gestalten. Durch Einsatz eines weiteren elektronisch steuerbaren Impedanznetzwerks 6, wird im unteren mittleren Drittel der Längsausdehnung der leitenden Fläche 1 ein zusätzlicher Impedanzanschlußpunkt 8 mit einem hierzu benachbarten Fahrzeugmassepunkt 11 gebildet. Daran ist, wie in Fig. 14, ein weiteres elektronisch steuerbares Impedanznetzwerk 6 in hinreichend großem Abstand vom ersten elektronisch steuerbaren Impedanznetzwerk 6 angeschlossen.

In Fig. 15 ist zur Gestaltung von Fahrzeugmassepunkten 11 bzw. des Fahrzeugmasseanschlußpunkts 2 längs des Randes der Fensterscheibe 39 zumindest im Bereich dieser Anschlußpunkte ein streifenförmiger Leiter 38 angebracht. Länge und Breite dieses Leiters sind hinreichend groß gewählt, so daß er mit dem leitenden Fensterrand der Fahrzeugkarosserie eine hinreichend große Kapazität bildet und somit ein ausreichend niederohmiger kapazitiver Anschluß an die Fahrzeugmasse 3 gegeben ist. Das elektronisch steuerbare Impedanznetzwerk 6 ist an diesen Leiter über den Impedanzanschlußpunkt 8 und das Anschlußnetzwerk 4 über den Antennenanschlußpunkt 5 angeschlossen. In Fig. 15 sind zusätzlich erfindungsgemäße dünnere Leiter 34 und 44 auf der Fensterscheibe 39 gezeichnet. Diese können je nach Bedarf sowohl als Steuerleitung 34 als auch als Stromversorgungsleitung 44, wie sie weiter unten beschrieben werden, dienen. Um die Signale, die zur Steuerung der Impedanzzustände in einem elektronisch steuerbaren Impedanznetzwerk 6 notwendig sind, werden erfindungsgemäß die Steuerleitungen 34 in Fig. 15 eingesetzt, welche die Steuersignale 23 zu den elektronisch steuerbaren Impedanznetzwerken 6 führen. Diese sind als auf das Glas aufgedruckte Leiter bzw. Mehrfachleiter ausgeführt. Die Schaltfunktionen in den elektronisch steuerbaren Impedanznetzwerken 6 werden vorzugsweise durch elektronische Schaltelemente 24 bewirkt, welche als Schaltdioden mit binären Schaltzuständen gestaltet sind. Die Schalteinrichtung 29 ist vorzugsweise im Anschlußnetzwerk 4 enthalten und ist derart gestaltet, daß die Steuersignale 23 unmittelbar zur Öffnung und Schließung der Schaltdioden (z.B. in Fig. 11b) geeignet sind.

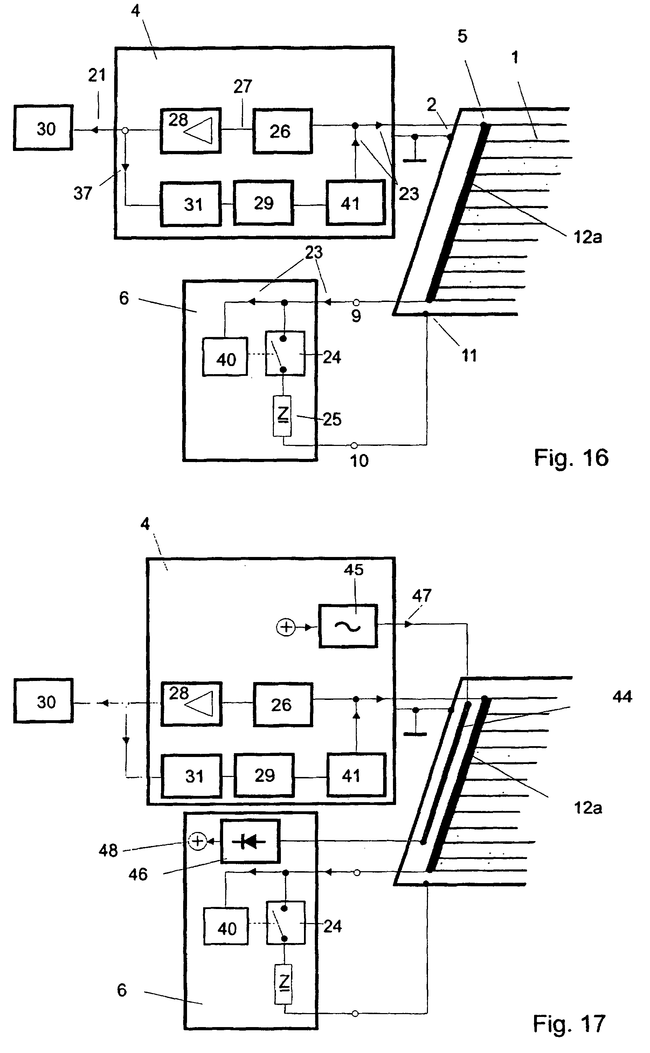

Zur gezielten Ansteuerung eines elektronisch steuerbaren Impedanznetzwerks 6 ist in Fig. 16 erfindungsgemäß ein Codegenerator 41 zur Erzeugung der Steuersignale 23 in Form eines geträgerten digitalen Adreßsignals vorhanden. Dieses Adreßsignal beinhaltet die Information für die Einstellung sämtlicher elektronisch steuerbarer Impedanznetzwerke 6 und ist diesem gemeinschaftlich über die leitende Fläche 1 zugeführt. Mit Hilfe jeweils einer Decodierschaltung 40 in einem elektronisch steuerbaren Impedanznetzwerk 6 werden die für die Einstellung der elektronischen Schaltelemente 24 notwendigen Signale erzeugt und den elektronischen Schaltelementen 24 zugeleitet.

Wie bereits erläutert, kann neben der Steuerleitung 34 auch die Stromversorgungsleitung 44 vorzugsweise als gedruckter Leiter ausgeführt werden. Zur Erzeugung der binären Zustände in den elektronischen Schaltelementen 24 ist eine Versorgungsgleichspannung zur Einstellung der Durchlaß- oder Sperrzustände notwendig. Gleichspannungen an zueinander benachbarten, auf die Fahrzeugfensterscheibe 39 gedruckte Leiter sind der Gefahr der Migration ausgesetzt. Diese verändern aufgrund elektrolytischer Vorgänge an betauten bzw. verschmutzten Fensterscheiben 39 die Ränder der gedruckten Leiter, so daß bei kleinen Abständen auch leitende Verbindungen zwischen ursprünglich getrennten Leitern zustande kommen können. Dieser Effekt wird erfindungsgemäß dadurch vermieden, daß die Energieversorgung für die Herstellung der Schaltzustände in den elektronisch steuerbaren Impedanznetzwerken 6, wie in Fig. 17, mit Hilfe einer Versorgungswechselspannung 47 auf der Stromversorgungsleitung 44 erfolgt. Hierzu ist erfindungsgemäß vorzugsweise im Anschlußnetzwerk 4 ein Wechselrichter 45, welcher an die Spannungsversorgung angeschlossen ist und an seinem Ausgang die Versorgungswechselspannung 47 liefert, enthalten. Zur Gewinnung der notwendigen Versorgungsgleichspannung 48 zur Herstellung der Schaltzustände der elektronischen Schaltelemente 24 in den elektronisch steuerbaren Impedanznetzwerken 6 ist ein Gleichrichter 46 vorhanden. Hierbei ist die Versorgungswechselspannung 47 spektral hinreichend rein zu halten, um Störeinflüsse auf das Antennensystem zu vermeiden.

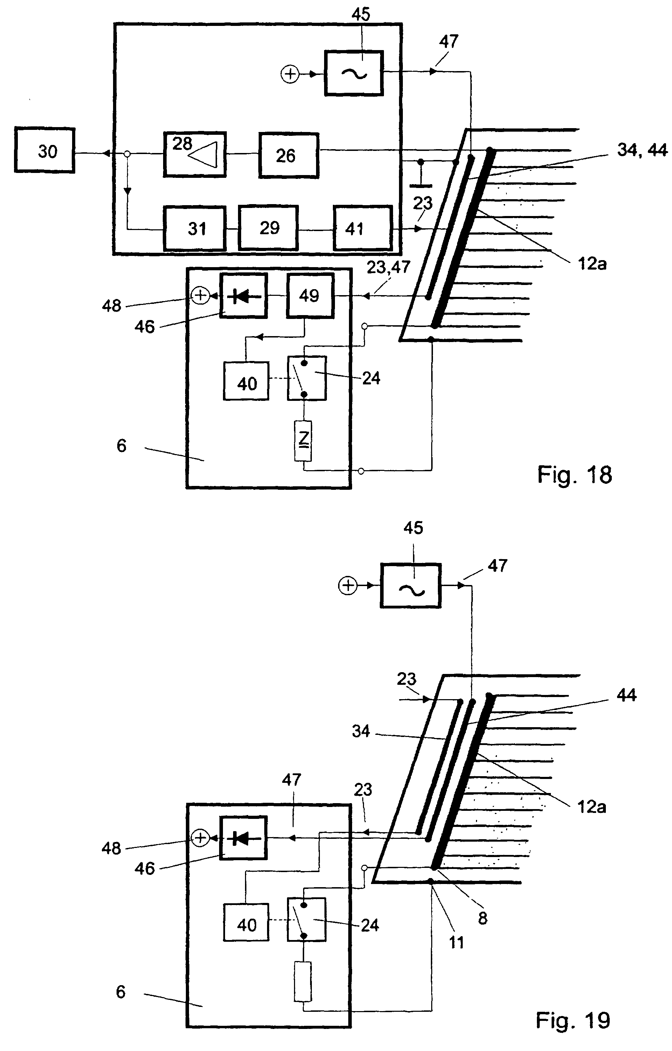

In Fig. 18 ist die Anzahl der als Steuerleitung 34 und Stromversorgungsleitung 44 verwendete Leiter durch Doppelnutzung reduziert, in dem sowohl die Versorgungswechselspannung 47 als auch die Steuersignale 23 über einen derartigen Leiter vom Anschlußnetzwerk 4 zum elektronisch steuerbaren Impedanznetzwerk 6 übertragen werden. Zur Trennung der Signale ist hierfür im elektronisch steuerbaren Impedanznetzwerk 6 ein Filter 49 verwendet.

Fig. 19 zeigt eine Prinzipdarstellung eines über den Impedanzanschlußpunkt 8 und einem benachbarten Fahrzeugmassepunkt 11 an die leitende Fläche 1 angeschlossenen elektronisch steuerbaren Impedanznetzwerks 6, bei dem die Steuersignale 23 über eine Steuerleitung 34 zugeführt sind und die Stromversorgung des elektronisch steuerbaren Impedanznetzwerks 6 über eine Stromversorgungsleitung 44 in Form einer Versorgungswechselspannung 47 erfolgt.

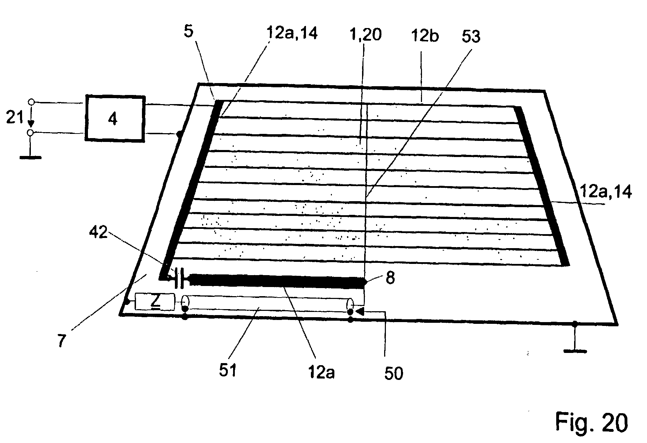

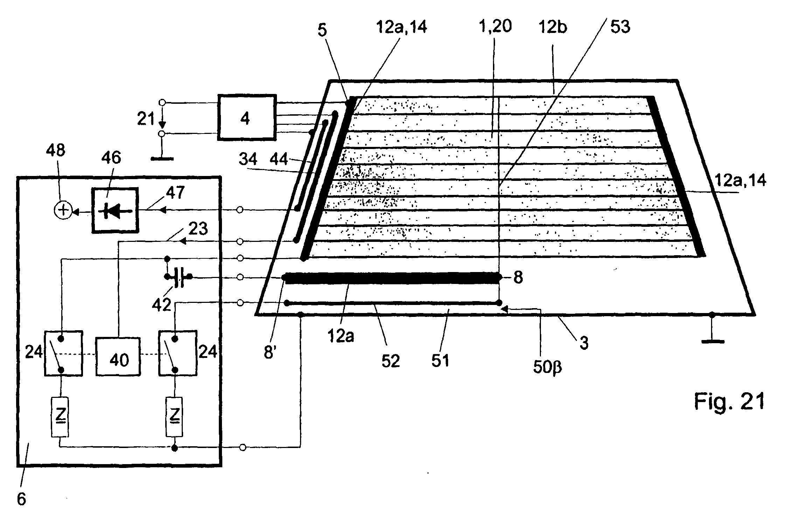

Erfindungsgemäß kann die Wirkung einer Impedanz an einer bestimmten Position am Randleiter 12 mit Hilfe einer an einem anderen Ort befindlichen Impedanzschaltung über eine verbindende Hochfrequenzleitung 51 erfolgen. Dies ist beispielhaft in Fig. 20 mit einer am linken unteren Eckpunkt 7 der leitenden Fläche 1 befindlichen Impedanz $\underline{Z}$ dargestellt, welche über eine parallel zum unteren Fensterrand geführte Hochfrequenzleitung 51 an ihrem rechten Ende den Anschlußpunkt 8 mit der wirksamen Impedanz 50 belastet. Die Impedanz $\underline{Z}$ ist dabei so gewählt, daß sich die gewünschten diversitätsmäßig unterschiedlichen Antennensignale 21 am Anschlußnetzwerk 4 einstellen. Diese Möglichkeit der Fernwirkung wird erfindungsgemäß vorteilhaft dazu genutzt, daß mit Hilfe nur einer einzigen Baueinheit wie in Fig. 21 als elektronisch steuerbarem Impedanznetzwerk 6 sowohl eine unterschiedliche Impedanzbeschaltung am Impedanzanschlußpunkt 8 in der horizontalen Mitte der Fensterscheibe 39 als auch am Impedanzanschlußpunkt 8' in der linken unteren Ecke 7 der leitenden Fläche 1 bewirkt werden kann. Unterschiedliche Impedanzbeschaltungen, welche am unteren Ende der Sammelschienen 14 erfolgen, wenn das Anschlußnetzwerk 4 am oberen Ende der Sammelschienen 14 angeschlossen ist, führen insbesondere bei horizontaler Polarisation der empfangenen Wellen zu guter Diversityeffizienz. Für vertikale Polarisation erweisen sich vertikale Leiter 53 im Bereich der Mitte der leitenden Fläche 1 als besonders vorteilhaft. Demzufolge führt die Anschaltung wechselnder wirksamer Impedanzen 50 zur Steigerung der Diversityeffizienz für vertikale Polarisationsanteile.

Die in Fig. 20 als Koaxialleitung ausgeführte Hochfrequenzleitung 51 läßt sich vorteilhaft durch einen gedruckten Leiter 52 parallel zum leitenden Fensterrand (Fahrzeugmasse 3) in Form einer unsymmetrischen Koplanarleitung gestalten, so daß sowohl die Hochfrequenzleitung 51 als auch die Steuerleitung 34 und die Stromversorgungsleitung 44 als gedruckte Leitungen realisiert werden können (s. Fig. 21 ). Zur Verbesserung der elektrischen Verkopplung zwischen dem Antennenanschlußpunkt 5 und dem Impedanzanschlußpunkt 8 in der unteren Mitte wird ein niederohmiger Verkopplungsleiter 12a, ausgehend von der linken unteren Ecke der leitenden Fläche 1 bis zur vertikalen Mitte der Fahrzeugscheibe geführt und galvanisch mit dem vertikalen Leiter 53 verbunden. Die notwendige Gleichstromauftrennung 42 erfolgt vorzugsweise mit Hilfe einer Kapazität im elektronisch steuerbaren Impedanznetzwerk 6. Mit Hilfe dieser Maßnahmen ist es möglich, ein hoch effektives Antennendiversitysystem herzustellen, welches ausschließlich aus der Glasscheibe mit gedruckten Leitern, dem Anschlußnetzwerk 4 und einer einzigen Baueinheit besteht, in der die elektronisch steuerbaren Impedanznetzwerke 6 untergebracht sind. Aufgrund der einfachen Ausgestaltung sowohl des Anschlußnetzwerks 4 als auch dieser Baueinheit mit elektronisch steuerbaren Impedanznetzwerken 6 kann ein derartiges Antennensystem bei geringem Aufwand für eine Vielzahl von diversitätsmäßig unterschiedlichen Antennensignalen 21 sehr leistungsfähig gestaltet werden.

**Liste der Bezeichnungen**

leitende Fläche 1
Fahrzeugmasseanschlußpunkt 2
Fahrzeugmasse 3
Anschlußnetzwerk 4
Antennenanschlußpunkt 5
elektronisch steuerbares Impedanznetzwerk 6
Eckpunkte der leitenden Fläche 7
Impedanzanschlußpunkt 8
erster HF-Anschluß 9
zweiter HF-Anschluß 10
Fahrzeugmassepunkt 11

Randleiter 12
niederohmiger Verkopplungsleiter 12a
induktiv hochohmiger Randleiter 12b
leitende Beschichtung 13
Sammelschienen 14
heizende Leiterteile 15
drahtförmige Leiter 16
Flußrichtung des Heizgleichstroms 17
HF-Strom sperrendes Zuführungsnetzwerk 18
hochfrequent leitender Zweipol 19
Heizfeld 20
Antennensignal 21
Steuertor bzw. Steuereingang 22
Steuersignale 23
elektronisches Schaltelement 24
Blindwiderstand 25
digital schaltbares Anpaßnetzwerk 26
Antennenleitung 27
Antennenverstärker 28
Schalteinrichtung 29
Empfänger 30
Diversityprozessor 31
Anzeigesignal 32
Schaltsignale 33
Steuerleitung 34
AM-Antennenleiter 35
AM-Verstärker 36
Empfangssignal 37
streifenförmiger Leiter 38
Fensterscheibe 39
Decodierschaltung 40
Codegenerator 41
Gleichstromauftrennung 42
streifenförmige Elektrode 43
Stromversorgungsleitung 44
Wechselrichter 45
Gleichrichter 46
Versorgungswechselspannung 47
Versorgungsgleichspannung 48
Filter 49
wirksame Impedanz 50
Hochfrequenzleitung 51
gedruckte Leiter 52
vertikale Leiter 53
Diversityumschalter 54

**Patentansprüche**

1. Diversityantenne für eine Diversityantennenanlage in einem Fahrzeug, z.B. einem Kraftfahrzeug, im Bereich einer von der elektrisch leitenden Fahrzeugmasse umgebenen Fensterscheibe, z. B. einer Heckscheibe, mit einer im wesentlichen rechteckig bzw. trapezförmig berandeten und mit elektrischen Leitern belegten Fläche, **dadurch gekennzeichnet, daß**
eine bezüglich ihrer Randleiter (12) zusammenhängende hochfrequent hinreichend leitfähige Fläche (1) gebildet ist und die Randleiter (12) von der Fahrzeugmasse (3) hochfrequenzmäßig isoliert gestaltet sind,
daß jeder Randleiter (12) einer Seite der leitenden Fläche (1) eine Mindestlänge von ca. λ/10 besitzt und mindestens ein Bereich der Randleiter (12) als niederohmiger Verkopplungsleiter (12a) mit einer laufenden Mindestlänge von ca. λ/10 gestaltet ist

und die Diversityantenne mit der aus der leitenden Fläche (1) gebildeten Antenne ein Klemmenpaar aufweist mit einem Fahrzeugmasseanschlußpunkt (2) und mit einem Antennenanschlußpunkt (5) auf einem der niederohmigen Verkopplungsleiter (12a) der Mindestlänge von ca. λ/10, das mit einem Anschlußnetzwerk (4) verbunden ist und mindestens ein elektronisch steuerbares Impedanznetzwerk (6) vorhanden ist

und ein über den niederohmigen Verkopplungsleiter (12a) mit dem Antennenanschlußpunkt (5) in Verbindung stehender Impedanzanschlußpunkt (8) gebildet ist, an den der erste HF-Anschluß (9) des elektronisch steuerbaren Impedanznetzwerks (6) angeschlossen ist und dessen zweiter HF-Anschluß (10) mit dem benachbarten Fahrzeugmassepunkt (11) hochfrequenzmäßig verbunden ist

und der Abstand zwischen dem Antennenanschlußpunkt (5) und dem nächstgelegenen Impedanzanschlußpunkt (8) mindestens λ/10 beträgt,

so daß mit Hilfe einer variablen Einstellung der Impedanzwerte der elektronisch einstellbaren Impedanznetzwerke (6) diversitätsmäßig unterschiedliche Antennensignale (21) am Ausgang des Anschlußnetzwerks (4) gebildet werden, wobei λ die Betriebswellen Länge ist.

2. Diversityantenne nach Anspruch 1, **dadurch gekennzeichnet, daß**
die leitende Fläche (1) vollständig von miteinander verbundenen niederohmigen Verkopplungsleitern (12a) umgeben ist und bis zu vier Impedanznetzwerke (6) vorhanden sind und jeweils unmittelbar in der Nähe eines der Eckpunkte (7) der leitenden Fläche auf dem Verkopplungsleiter (12a) ein Impedanzanschlußpunkt (8) gebildet ist, an den der erste Anschluß (9) des elektronisch steuerbaren Impedanznetzwerks (6) angeschlossen ist und dessen zweiter Anschluß (10) mit dem benachbarten Fahrzeugmasseanschlußpunkt (2) verbunden ist.

3. Diversityantenne für den UKW-Empfang nach Anspruch 1 und 2, **dadurch gekennzeichnet, daß** die Abmessung des längsten Randleiters (12) der leitenden Fläche (1) 1/4 bis 1/2 Betriebswellenlänge beträgt.

4. Diversityantenne für den UKW-Empfang nach Anspruch 3, **dadurch gekennzeichnet, daß**
die Abmessung des kürzesten Randleiters (12) der leitenden Fläche (1) 1/10 bis 1/4 der Betriebswellenlänge beträgt.

5. Diversityantenne nach Anspruch 1 bis 4, **dadurch gekennzeichnet, daß**
die leitende Fläche (1) als lichtdurchlässige leitende Beschichtung (13) auf einer Glasoberfläche aufgebracht ist bzw. als leitende Schicht in den Glasverbund eingebracht ist und die niederohmigen Verkopplungsleiter (12a) durch die hohe Leitfähigkeit der leitfähigen Beschichtung (13) gegeben sind.

6. Diversityantenne nach Anspruch 5, **dadurch gekennzeichnet, daß**
die leitende Beschichtung (13) aufgrund der geforderten Lichtdurchlässigkeit begrenzt leitfähig mit einem Oberflächenwiderstand von 3 - 10 Ohm gestaltet ist und zur Gestaltung der niederohmigen Verkopplungsleiter (12a) streifenförmige Elektroden (43) mit hochfrequent niederohmigem Kontakt zur leitenden Fläche (1) mindestens teilweise am Rand der leitenden Fläche (1) vorhanden sind.

7. Diversityantenne nach Anspruch 1 bis 4, **dadurch gekennzeichnet, daß**
die leitende Fläche (1) aus dem in einer PKW-Scheibe angeordneten Heizfeld (20) mit stirnseitig angeordneten Sammelschienen (14) zur Zuführung des Heizstroms und zwischen diesen angeordneten zu heizenden Leiterteilen (15) gestaltet ist, so daß die niederohmigen Verkopplungsleiter (12a) durch die Sammelschienen (14) gebildet sind.

8. Diversityantenne nach Anspruch 7, **dadurch gekennzeichnet, daß**
die zu heizenden Leiterteile (15) drahtförmig durch in den Glasverbund eingelegte Drähte bzw. als auf Glas aufgedruckte Leiter gestaltet sind und induktiv hochohmige Randleiter (12b) durch die am Rande der leitenden Fläche (1) befindlichen zu heizenden Leiterteile (15) wirksam sind.

9. Diversityantenne nach Anspruch 7, **dadurch gekennzeichnet, daß**
zur Gestaltung eines hochfrequent niederohmigen Verkopplungsleiters (12a) zwischen den beiden Sammelschienen (14) mindestens ein niederohmiger Verkopplungsleiter (12a) mit seriell kapazitiver Gleichstromauftrennung (42) vorhanden ist.

10. Diversityantenne nach Anspruch 8, **dadurch gekennzeichnet, daß**
zur Gestaltung eines hochfrequent niederohmigen Verkopplungsleiters (12a) aus drahtförmigen zu heizenden Leiterteilen (15) senkrecht zur Flußrichtung des Heizgleichstroms (17) mindestens ein bzw. mehrere parallel zueinander geführte drahtförmige Leiter (16) senkrecht zur Flußrichtung des Heizgleichstromes derart angebracht ist bzw. sind, daß sie galvanisch bzw. kapazitiv an mindestens zwei der drahtförmigen zu heizenden Leiterteile (15) angekoppelt sind.

11. Diversityantenne nach Anspruch 7 bis 10, **dadurch gekennzeichnet, daß** in die Heizstromzuführungsleitungen an den Sammelschienen (14) HF-Ströme sperrende Zuführungsnetzwerke (18) eingefügt sind.

12. Diversityantenne nach Anspruch 4 in Verbindung mit den Ansprüchen 7 bis 10, **dadurch gekennzeichnet, daß** in der Heizstromzuführungsleitung der ersten Sammelschiene (14a) ein HF-Ströme sperrendes Zuführungsnetzwerk (18) vorhanden ist und die zweite Heizstromzuführungsleitung an der Sammelschiene (14b) galvanisch mit der Fahrzeugmasse (3) verbunden ist und in der Nähe mindestens eines der Eckpunkte (7) auf der ersten Sammelschiene (14a) ein elektronisch steuerbares Impedanznetzwerk (6) vorhanden ist und im mittleren Drittel der Längenausdehnung eines der beiden längeren Randleiter (12) ein Antennenanschlußpunkt (5) zum Anschluß des Anschlußnetzwerks (4) vorhanden ist.

13. Diversityantenne nach Anspruch 7 bis 11 in der Heckscheibe eines Pkw, **dadurch gekennzeichnet, daß** aus Gründen der getrennten Heizstromzuführung übereinander angeordnete, galvanisch von einander getrennte Heizfelder (20) mit horizontaler Flußrichtung des Heizgleichstromes (17) vorhanden sind und zur Bildung einer möglichst großen hochfrequent wirksamen leitenden Fläche (1) die jeweils übereinander benachbarten Sammelschienen (14) der Heizfelder (20) mit einem hochfrequent leitenden Zweipol (19) miteinander verbunden sind.

14. Diversityantenne nach Anspruch 13, **dadurch gekennzeichnet, daß** mindestens anstelle eines hochfrequent leitenden Zweipols (19) ein elektronisch steuerbares Impedanznetzwerk (6) geschaltet ist.

15. Diversityantenne nach Anspruch 1 bis 14 **dadurch gekennzeichnet, daß** am elektronisch steuerbaren Impedanznetzwerk (6) mindestens ein Steuertor (22) zur Einstellung des wirksamen Impedanzwerts zwischen dem ersten HF-Anschluß (9) und dem zweiten HF-Anschluß (10) vorhanden ist, so daß durch Anlegen unterschiedlicher Steuersignale (23) diversitätsmäßig unterschiedliche Antennensignale (21) am Ausgang des Anschlußnetzwerks (4) gebildet sind.

16. Diversityantenne nach Anspruch 1 bis 15, **dadurch gekennzeichnet, daß** im elektronisch steuerbaren Impedanznetzwerk (6) mindestens ein digital einstellbares elektronisches Schaltelement (24) mit diskreten Schaltzuständen gegebenenfalls in Verbindung mit Blindwiderständen (25) zur Einstellung diskreter Impedanzwerte vorhanden ist und die Einstellung der diskreten Impedanzwerte durch Anlegen einer oder ggfs. mehrerer digitaler Steuersignale (23) an das Steuertor (22) bzw. die Steuertore (22) gegeben ist.

17. Diversityantenne nach Anspruch 1 bis 16 in Verbindung mit einer Diversityempfangsanlage mit einem Diversityprozessor (31) zur Erkennung und Anzeige von Empfangsstörungen im Antennensignal (21) bzw. in einem daraus abgeleiteten Empfangssignal (37) mit Hilfe eines Anzeigesignals (32), **dadurch gekennzeichnet, daß** eine Schalteinrichtung (29) vorhanden ist, der das Anzeigesignal (32) zugeführt ist und an deren Ausgang die Steuersignale (23) gebildet sind und über die Steuerleitungen (34) den steuerbaren Impedanznetzwerken (6) zugeleitet sind und die Schalteinrichtung (29) derart gestaltet ist, daß bei Auftreten einer Empfangsstörung im Antennensignal (21) durch den Impedanzwert mindestens eines der elektronisch steuerbaren Impedanznetzwerke (6) ein diversitätsmäßig unterschiedliches Antennensignal (21) am Eingang des Anschlußnetzwerks (4) gebildet ist und im Zusammenspiel mit dem Diversityprozessor (31) die Änderung des Antennensignals (21) solange fortgeführt wird, bis der Diversityprozessor (31) keine Störung anzeigt.

18. Diversityantenne nach Anspruch 17, **dadurch gekennzeichnet, daß** im Anschlußnetzwerk (4) ein verlustfreies digital schaltbares Anpaßnetzwerk (26) zur jeweiligen Impedanzanpassung der bei den verschiedenen Schaltzuständen der elektronisch steuerbaren Impedanznetzwerke (6) an dem Antennenanschlußpunkt (5) vorliegenden Impedanz an die zum Empfänger (30) führende Antennenleitung (27) bzw. ggfs. an den im Anschlußnetzwerk (4) befindlichen Antennenverstärker (28) vorhanden ist und in der Schalteinrichtung (29) Schaltsignale (33) zur Steuerung des digital schaltbaren Anpaßnetzwerks (26) erzeugt und letzterem über Steuerleitungen (34) zugeleitet sind.

19. Diversityantenne nach Anspruch 3 bis 4 und Anspruch 7- 18, **dadurch gekennzeichnet, daß** der Antennenanschlußpunkt (5) zum Anschluß des Anschlußnetzwerks (4) am oberen Ende einer der beiden Sammelschienen (14) ausgebildet ist und am unteren Ende derselben ein erster und am oberen Ende der anderen Sammelschiene (14) ein zweiter Impedanzanschlußpunkt (8) zum Anschluß eines ersten und entsprechend eines zweiten elektronisch steuerbaren Impedanznetzwerks (6) gebildet ist und das erste elektronisch steuerbare Impedanznetzwerk (6) für die digitale Einstellung von drei diskreten Impedanzwerten und das zweite elektronisch steuerbares Impedanznetzwerk (6) für die digitale Einstellung von zwei diskreten Impedanzwerten gestaltet ist.

**20.** Diversityantenne nach Anspruch 19, **dadurch gekennzeichnet, daß**
durch digitale Ansteuerung der Impedanznetzwerke (6) insgesamt vier verschiedene diversitätsmäßige Antennensignale (21) gebildet sind. Die eingestellten Kombinationen der Impedanzwerte lauten für das erste und zweite Impedanznetzwerk (6) wie folgt:

| Komb.Nr. | erstes Netzwerk | zweites Netzwerk |
|----------|-----------------|------------------|
| 1 | ca.50 Ohm induktiv | hochohmig |
| 2 | hochohmig | hochohmig |
| 3 | hochohmig | niederohmig |
| 4 | niederohmig | niederohmig |

**21.** Diversityantenne nach Anspruch 20, **dadurch gekennzeichnet, daß**
zur Bildung einer AM/FM-Diversity-Antenne oberhalb der leitenden Fläche (1) ein AM-Antennenleiter (35) zum Empfang von AM-Rundfunksignalen vorhanden ist und im Anschlußnetzwerk (4) ein AM-Verstärker (36) mit kurzem Anschluß an den AM-Antennenleiter (35) vorhanden ist.

**22.** Diversityantenne nach Anspruch 1 bis 21, **dadurch gekennzeichnet, daß**
im mittleren Drittel der Längenausdehnung der leitenden Fläche (1) zusätzlich an mindestens einem der beiden längeren Randleiter (12) ein zusätzlicher Impedanzanschlußpunkt (8) mit einem hierzu benachbarten Fahrzeugmassepunkt (11) gebildet ist mit einem daran angeschlossenen elektronisch steuerbaren Impedanznetzwerk (6).

**23.** Diversityantenne nach Anspruch 1 bis 22, **dadurch gekennzeichnet, daß**
zur Gestaltung von Fahrzeugmassepunkten (11) bzw. des Fahrzeugmasseanschlußpunkts (2) längs des Randes der Fensterscheibe zumindest im Bereich dieser Anschlußpunkte ein streifenförmiger Leiter (38) hinreichender Länge und Breite angebracht ist, welcher mit dem Fensterrand der Fahrzeugkarosserie eine hinreichend große Kapazität bildet, so daß ein kapazitiver Anschluß an die Fahrzeugmasse (3) gegeben ist.

**24.** Diversityantenne nach Anspruch 1 bis 23, **dadurch gekennzeichnet, daß**
die Steuerleitungen (34), welche die Steuersignale (23) zu den elektronisch steuerbaren Impedanznetzwerken (6) führen, als auf das Glas aufgedruckte Leiter bzw. Mehrfachleiter ausgeführt sind.

**25.** Diversityantenne nach Anspruch 1 bis 24, **dadurch gekennzeichnet, daß**
die elektronischen Schaltelemente (24) als Schaltdioden mit binären Schaltzuständen gestaltet sind und die Schalteinrichtung (29) im Anschlußnetzwerk (4) enthalten ist und derart gestaltet ist, dass die Steuersignale (23) unmittelbar zur Öffnung und Schließung der Schaltdioden geeignet sind.

**26.** Diversityantenne nach Anspruch 1 bis 24 **dadurch gekennzeichnet, daß**
ein Codegenerator (41) zur Erzeugung der Steuersignale (23) in Form eines geträgerten digitalen Adreßsignals vorhanden ist und das Adreßsignal die Information für die Einstellung sämtlicher elektronisch steuerbaren Impedanznetzwerke (6) beinhaltet und diesen gemeinschaftlich über die leitende Fläche (1) zugeführt ist und in den steuerbaren Impedanznetzwerken (6) jeweils eine Decodierschaltung (40) zur Erzeugung der für die Einstellung der elektronischen Schaltelemente (24) notwendigen Signale vorhanden ist.

**27.** Diversityantenne nach Anspruch 1 bis 26 **dadurch gekennzeichnet,**
**daß** eine Stromversorgungsleitung (44) auf die Fensterscheibe (39) gedruckt ist und die für die Sperr- und Durchlaßzustände des elektronischen Schaltelements (24) notwendige Stromversorgung über die Stromversorgungsleitung (44) zum elektronisch steuerbaren Impedanznetzwerk (6) hin geführt ist.

**28.** Diversityantenne nach Anspruch 27 **dadurch gekennzeichnet,**
**daß** zur Vermeidung von Migrationseffekten die Stromversorgungsleitung (44) eine Versorgungswechselspannung (47) mit einem hinsichtlich der Ausbildung von solchen Effekten vernachlässigbaren zeitlichen Mittelwert führt und die Versorgungswechselspannung (47) von einem Wechselrichter (45) erzeugt ist und zur Gewinnung der für die Sperr-und Durchlaßzustände des elektronischen Schaltelements (24) notwendige Versorgungsgleichspannung (48) im steuerbaren Impedanznetzwerk (6) ein Gleichrichter (46) vorhanden ist und der Wechselrichter (45) vorzugsweise im Anschlußnetzwerk (4) untergebracht ist.

**29.** Diversityantenne nach Anspruch 1 bis 28 **dadurch gekennzeichnet,**
**daß** zur Impedanzbeschaltung zwischen dem Impedanzanschlußpunkt (8) und dem Fahrzeugmassepunkt (11) mit der wirksamen Impedanz (50), letztere mit Hilfe einer Hochfrequenzleitung (51) erzeugt ist, an derem anderen Ende die Impedanz $\underline{Z}$ des elektronisch steuerbaren Impedanznetzwerks (6) angeschaltet ist und die Hochfrequenzleitung (51) vorzugsweise am Rand der Fensterscheibe (39) geführt ist.

**30.** Diversityantenne nach Anspruch 29 **dadurch gekennzeichnet,**
**daß** die Hochfrequenzleitung (51) als ein auf die Fensterscheibe (39) gedruckter Leiter (52) ausgeführt ist, welcher parallel zur Fahrzeugmasse (3) geführt ist und die notwendige Gleichstromauftrennung (42) zwischen der Sammelschiene (14) und dem niederohmigen Verkopplungsleiter (12a) zusammen mit den die Impedanz $\underline{Z}$ realisierenden Bauelementen im steuerbaren Impedanznetzwerk (6) enthalten ist.

**Claims**

**1.** Diversity antenna for a diversity antenna system in a vehicle, e.g. a car, in the region of a windscreen, e.g. a rear windscreen, surrounded by the electrically conductive vehicle mass, having a surface with a substantially rectangular or trapezoidal outline and covered with electric conductors, **characterised in that**
a surface (1) is formed of sufficient conductivity for high frequency, which is cohesive with respect to its boundary conductors (12), and the boundary conductors (12) are constructed to be insulated from the vehicle mass (3) for high frequencies,
each boundary conductor (12) on one side of the conductive surface (1) has a minimum length of about $\lambda/10$ and at least one region of the boundary conductors (12) is constructed as a low-impedance coupling conductor (12a) with a continuous minimum length of about $\lambda/10$,
and the diversity antenna with the antenna formed from the conductive surface (1) has a pair of terminals with a connection point (2) to the vehicle mass and with an antenna connection point (5) on one of the low-impedance coupling conductors (12a) with a minimum length of about $\lambda/10$, which is connected to a connecting network (4),
and at least one electronically controllable impedance network (6) is provided
and an impedance connecting point (8) connected to the antenna connecting point (5) via the low-impedance coupling conductor (12a) is formed, to which the first HF connection (9) of the electronically controllable impedance network (6) is connected while the second HF connection (10) thereof has a high frequency connection to the adjacent vehicle mass point (11)
and the distance between the antenna connecting point (5) and the nearest impedance connecting point (8) is at least $\lambda/10$,
so that by means of a variable setting of the impedance values of the electronically adjustable impedance networks (6) a diversity of different antenna signals (21) are formed at the output from the connecting network (4), $\lambda$ being the operating wavelength.

**2.** Diversity antenna according to claim 1, **characterised in that**
the conductive surface (1) is completely surrounded by low-impedance coupling conductors (12a) connected to one another and up to four impedance networks (6) are provided and in the immediate vicinity of one of the corners (7) of the conductive surface on the coupling conductor (12a) an impedance connecting point (8) is formed, to which the first connection (9) of the electronically controllable impedance network (6) is connected while the second connection (10) thereof is connected to the adjacent vehicle mass connecting point (2).

**3.** Diversity antenna for receiving VHF according to claims 1 and 2, **characterised in that** the dimension of the longest boundary conductor (12) of the conductive surface (1) is 1/4 to 1/2 of the operating wavelength.

**4.** Diversity antenna for receiving VHF according to claim 3, **characterised in that** the dimension of the shortest boundary conductor (12) of the conductive surface (1) is 1/10 to 1/4 of the operating wavelength.

5. Diversity antenna according to claims 1 to 4, .**characterised in that** the conductive surface (1) is applied to a glass surface as a transparent conductive coating (13) or is incorporated in the composite glass structure as a conductive layer and the low-impedance coupling conductors (12a) are provided by the high conductivity of the conductive coating (13).

6. Diversity antenna according to claim 5, **characterised in that** the conductive surface (13) is constructed to have limited conductivity with a surface resistance of 3 to 10 ohms on account of the transparency needed, and strip electrodes (43) with a high-frequency, low-impedance contact with the conductive surface (1) are provided at least partly on the edge of the conductive surface (1) to form the low-impedance coupling conductors (12a).

7. Diversity antenna according to claims 1 to 4, **characterised in that** the conductive surface (1) is formed from the heating panel (20) provided in a car windscreen with busbars (14) arranged on the end face for supplying the heating current and conductor parts (15) which are to be heated arranged between them, so that the low-impedance coupling conductors (12a) are formed by the busbars (14).

8. Diversity antenna according to claim 7, **characterised in that** the conductor parts (15) which are to be heated are constructed in the form of wires inlaid in the composite glass structure or as conductors printed onto the glass, and inductively low-impedance boundary conductors (12b) are made operative by the conductor parts (15) to be heated, which are located at the boundary of the conductive surface.

9. Diversity antenna according to claim 7, **characterised in that** in order to form a high-frequency, low-impedance coupling conductor (12a) between the two busbars (14), at least one low-impedance coupling conductor (12a) with a series-capacitive direct-current separation (42) is provided.

10. Diversity antenna according to claim 8, **characterised in that** in order to form a high-frequency, low-impedance coupling conductor (12a) from conductor parts (15) which are to be heated in the form of wires extending perpendicularly to the direction of flow of the direct heating current (17), at least one or more conductors (16) in the form of wires running parallel to one another is or are provided perpendicularly to the direction of flow of the direct heating current (17) in such a way that they are galvanically or capacitively coupled to at least two of the conductor parts (15) in the form of wires which are to be heated.

11. Diversity antenna according to claims 7 to 10, **characterised in that** supply networks (18) which block HF currents are inserted in the heating current supply lines at the busbars (14).

12. Diversity antenna according to claim 4 in conjunction with claims 7 to 10, **characterised in that** in the heating current supply line of the first busbar (14a) is a supply network (18) blocking HF currents and the second heating current supply line on the busbar (14b) is galvanically connected to the vehicle mass (3) and in the vicinity of at least one of the corners (97) on the first busbar (14a) is provided an electronically controllable impedance network (6) and in the middle third of the longitudinal extent of one of the two longer boundary conductors (12) is an antenna connecting point (5) for connecting the connecting network (4).

13. Diversity antenna according to claims 7 to 11 in the rear windscreen of a car, **characterised in that**, for reasons of the separate supply of heating current, heating panels (20) galvanically separated from one another with the direct heating current (17) flowing horizontally are arranged above one another, and to form the largest possible conductive surface (1) operating at high frequency adjacent busbars (14) of the heating panels (20) arranged above one another are connected to one another by a high frequency conducting two-terminal network (19).

14. Diversity antenna according to claim 13, **characterised in that** an electronically controllable impedance network (6) is connected up, at least instead of a high frequency conducting two-terminal network (19).

15. Diversity antenna according to claims 1 to 14, **characterised in that** on the electronically controllable impedance network (6) is provided at least one control gate (22) for adjusting the effective impedance value between the first HF connection (9) and the second HF connection (10), so that by applying different control signals (23) a diversity of different antenna signals (21) are formed at the output from the connecting network (4).

16. Diversity antenna according to claims 1 to 14, **characterised in that** in the electronically controllable impedance network (6) is provided at least one digitally adjustable electronic switching element (24) with discrete switching states, optionally in conjunction with reactances (25) for setting discrete impedance values, and the setting of the discrete impedance values is obtained by applying one or optionally more digital control signals (23) to the control gate (22) or control gates (22).

17. Diversity antenna according to claims 1 to 16 in conjunction with a diversity receiving system having a diversity processor (31) for recognising and indicating faulty reception in the antenna signal (21) or in a reception signal (37) derived therefrom by means of an indicator signal (32), **characterised in that**
a switching device (29) is provided to which the indicator signal (32) is fed and at the output of which the control signals (23) are formed and are fed through the control lines (34) to the controllable impedance networks (6)
and the switching device (29) is designed so that, if faulty reception occurs in the antenna signal (21), through the impedance value of at least one of the electronically controllable impedance networks (6), a diversely different antenna signal (21) is formed at the input of the connecting network (4)
and in the interaction with the diversity processor (31) the change in the antenna signal (21) is continued until the diversity processor (31 shows no fault.

18. Diversity antenna according to claim 17, **characterised in that**
in the connecting network (4) is provided a loss-free digitally switchable adapting network (26) for adapting the impedance occurring at the antenna connecting point (5) in the various switching states of the electronically controllable impedance networks (6) to the antenna lead (27) which leads to the receiver (30) or optionally to the antenna amplifier (28) located in the connecting network (4)
and in the switching device (29) switching signals (33) for controlling the digitally switchable adapting network (26) are generated and are fed to the latter through control lines (34).

19. Diversity antenna according to claims 3 to 4 and claims 7 to 18, **characterised in that**
the antenna connecting point (5) for connecting the connecting network (4) is formed at the top end of one of the two busbars (14) and at the lower end thereof are formed a first impedance connecting point and, at the top end of the other busbar (14), a second impedance connecting point (8) for connecting a first and accordingly a second electronically controllable impedance network (6)
and the first electronically controllable impedance network (6) is designed for digital adjustment of three discrete impedance values and the second electronically controllable impedance network (6) is designed for digital adjustment of two discrete impedance values.

20. Diversity antenna according to claim 19, **characterised in that** by digitally actuating the impedance networks (6) a total of four different diverse antenna signals (21) are formed. The combinations of the impedance values selected for the first and second impedance network (6) are as follows:

| Comb. no. | first network | second network |
|:---:|---|---|
| 1 | about 50 ohms inductive | high impedance |
| 2 | high impedance | high impedance |
| 3 | high impedance | low impedance |
| 4 | low impedance | low impedance |

21. Diversity antenna according to claim 20, **characterised in that**
in order to form an AM/FM diversity antenna an AM antenna conductor (35) for receiving AM radio signals is provided above the conductive surface (1) and in the connecting network (4) there is an AM amplifier (36) with a short connection to the AM antenna conductor (35).

22. Diversity antenna according to claims 1 to 21, **characterised in that**
in the middle third of the longitudinal extent of the conductive surface (1) an additional impedance connecting point (8) with an adjacent vehicle mass point (11) is additionally formed on at least one of the two longer boundary conductors (12), with an electronically controllable impedance network (6) connected thereto.

23. Diversity antenna according to claims 1 to 22, **characterised in that**
in order to form vehicle mass points (11) or the vehicle mass connecting point (2), along the edge of the windscreen at least in the region of these connecting points, is mounted a strip-shaped conductor (38) of sufficient length and width which together with the window surround of the vehicle bodywork forms a capacitor large enough to form a capacitive connection to the vehicle body (3).

24. Diversity antenna according to claims 1 to 23,
**characterised in that** the control lines (34) which carry the control signals (23) to the electronically controllable impedance networks (6) are constructed as conductors or multiple conductors printed onto the glass.

25. Diversity antenna according to claims 1 to 24, **characterised in that**
the electronic switching elements (24) are constructed as switching diodes with binary switching states and the switching device (29) is contained in the connecting network (4) and is constructed so that the control signals (23) are directly suitable for opening and closing the switching diodes.

26. Diversity antenna according to claims 1 to 24, **characterised in that** a code generator (41) is provided for generating the control signals (23) in the form of a carrier-held digital address signal and the address signal contains the information for adjusting all the electronically controllable impedance networks (6) and is supplied communally to them through the conductive surface (1) and in the controllable impedance networks (6) is provided a decoding circuit (40) for generating the signals needed to set the electronic switching elements (24).

27. Diversity antenna according to claims 1 to 26, **characterised in that** a current supply line (44) is printed onto the windscreen (39) and the current supply required for the blocking and pass states of the electronic switching element (24) is delivered to the electronically controllable impedance network (6) through the current supply line (44).

28. Diversity antenna according to claim 27,
**characterised in that**, in order to avoid migratory effects, the current supply line (44) carries an alternating supply voltage (47) with a time average which is negligible in terms of producing such effects and the alternating supply voltage (47) is generated by an inverter (45) and in order to obtain the direct supply voltage (48) needed for the blocking and pass states of the electronic switching element (24) in the controllable impedance network (6) there is a rectifier (46) and the inverter (45) is preferably accommodated in the connecting network (4).

29. Diversity antenna according to claims 1 to 28, **characterised in that** to wire up for the impedance between the impedance connecting point (8) and the vehicle mass point (11) with the effective impedance (50), the latter is generated by means of a high frequency line (51) to the other end of which is connected the impedance $\underline{Z}$ of the electronically controllable impedance network (6) and the high frequency line (51) is preferably passed along the edge of the windscreen (39).

30. Diversity antenna according to claim 29, **characterised in that** the high frequency line (51) is constructed as a conductor (52) printed onto the windscreen (39), which runs parallel to the vehicle mass (3), and the necessary direct current separation (42) between the busbar (14) and the low-impedance coupling conductor (12a) together with the components which produce the impedance $Z$ is contained in the controllable impedance network (6).

**Revendications**

1. Antenne à diversité pour une installation d'antenne à diversité dans un véhicule, par exemple un véhicule à moteur, au niveau d'une vitre de fenêtre entourée par la masse électriquement conductrice du véhicule, par exemple une vitre arrière, avec une surface à bord sensiblement rectangulaire ou trapézoïdal et couverte par des conducteurs électriques, **caractérisée en ce qu'**une surface (1) d'un seul tenant en ce qui concerne ses conducteurs de bord (12) et suffisamment conductrice à haute fréquence est formée et les conducteurs de bord (12) sont conçus pour être isolés à haute fréquence de la masse du véhicule (3),
**en ce que** chaque conducteur de bord (12) d'un côté de la surface conductrice (1) a une longueur minimale de $\lambda/10$ et au moins une partie des conducteurs de bord (12) est conçue comme des conducteurs de couplage à basse impédance (12a) avec une longueur minimale de $\lambda/10$,
et **en ce que** l'antenne à diversité avec l'antenne formée par la surface conductrice (1) présente une paire de bornes avec un point de masse du véhicule (2) et avec un point de connexion d'antenne (5) sur l'un des conducteurs de couplage à basse impédance (12a) d'une longueur minimale de $\lambda/10$ environ, qui est relié à un réseau de connexion (4),
et il est prévu au moins un réseau à impédance à régulation électronique (6),

et un point de connexion à impédance (8) relié au point de connexion d'antenne (5) est formé par l'intermédiaire des conducteurs de couplage à basse impédance (12a), auquel est reliée la première connexion HF (9) du réseau à impédance à régulation électronique (6) et dont la deuxième connexion HF (10) est reliée à haute fréquence avec le point de masse du véhicule (11) voisin,

et la distance entre le point de connexion d'antenne (5) et le point de connexion à impédance (6) le plus proche est au minimum de λ/10,

de façon telle qu'à l'aide d'un réglage variable des valeurs d'impédance des réseaux à impédance à régulation électronique (6), des signaux d'antenne (21) différents dans le sens d'une diversité soient formés à la sortie du réseau de connexion (4), λ étant la longueur d'onde de fonctionnement.

2.  Antenne à diversité selon la revendication 1, **caractérisée en ce que** la surface conductrice (1) est entièrement entourée de conducteurs de couplage à basse impédance (12a) reliés les uns aux autres et il est prévu jusqu'à quatre réseaux à impédance (6) et il est prévu à proximité immédiate de l'un des angles (7) de la surface conductrice, sur le conducteur de couplage (12a), un point de connexion à impédance (8) sur lequel est connectée la première connexion (9) du réseau à impédance à régulation électronique (6) et dont la deuxième connexion (10) est reliée au point de masse du véhicule (2) voisin.

3.  Antenne à diversité pour la réception d'ondes ultra-courtes selon l'une des revendications 1 et 2, **caractérisée en ce que** la dimension du conducteur de bord (12) le plus long de la surface conductrice (1) correspond à 1/4 à 1/2 de la longueur d'onde de fonctionnement.

4.  Antenne à diversité pour la réception d'ondes ultra-courtes selon la revendication 3, **caractérisée en ce que** la dimension du conducteur de bord (12) le plus long de la surface conductrice (1) correspond à 1/10 à 1/4 de la longueur d'onde de fonctionnement.

5.  Antenne à diversité selon l'une des revendications 1 à 4, **caractérisée en ce que** la surface conductrice (1) est un revêtement conducteur translucide (13) appliqué sur une surface de verre ou une couche conductrice intégrée dans le feuilletage du verre et les conducteurs de couplage à basse impédance (12a) sont créés par la conductivité élevée du revêtement conducteur (13).

6.  Antenne à diversité selon la revendication 5, **caractérisée en ce que** le revêtement conducteur (13) a une conductivité limitée en raison de la translucidité nécessaire avec une résistance de surface de 3 à 10 ohms et il est prévu pour créer les conducteurs de couplage à basse impédance (12a) des électrodes (43) en forme de bandes ayant un contact à haute fréquence et basse impédance avec la surface conductrice (1) sur au moins une partie du bord de la surface conductrice (1).

7.  Antenne à diversité selon l'une des revendications 1 à 4, **caractérisée en ce que** la surface conductrice (1) est formée à partir d'un champ chauffant (20) disposé dans une vitre de véhicule avec des barres collectrices ( 14) disposées sur la face frontale pour l'acheminement du courant de chauffage et des parties de conducteurs à chauffer (15) disposées entre celles-ci, de telle sorte que les conducteurs de couplage à basse impédance (12a) sont formés par les barres collectrices (14).

8.  Antenne à diversité selon la revendication 7, **caractérisée en ce que** les parties de conducteurs à chauffer ( 15) sont en forme de fils et intégrées dans le feuilletage du verre ou sont des conducteurs imprimés sur le verre, et des conducteurs de bord à haute impédance (12b) par induction sont formés par les parties de conducteurs à chauffer (15) qui se trouvent au bord de la surface conductrice (1).

9.  Antenne à diversité selon la revendication 7, **caractérisée en ce que**, pour créer un conducteur de couplage (12a) à basse impédance à haute fréquence entre les deux barres collectrices ( 14), il est prévu au moins un conducteur de couplage à basse impédance (12a) avec une séparation de courant continu capacitive en série (42).

10. Antenne à diversité selon la revendication 8, **caractérisée en ce que**, pour créer un conducteur de couplage (12a) à basse impédance à haute fréquence à partir de parties de conducteurs à chauffer ( 15) en forme de fils perpendiculairement au sens d'écoulement du courant continu de chauffage (17), au moins un ou plusieurs conducteurs en forme de fils (16) parallèles les uns aux autres sont disposés perpendiculairement au sens d'écoulement du courant continu de chauffage de telle sorte qu'ils se trouvent en couplage galvanique ou capacitif avec au moins deux des parties de conducteurs à chauffer (15) en forme de fils.

**11.** Antenne à diversité selon l'une des revendications 7 à 10, **caractérisée en ce que** des réseaux d'alimentation (18) bloquant les courants à haute fréquence sont insérés dans les lignes d'alimentation en courant de chauffage sur les barres collectrices ( 14).

**12.** Antenne à diversité selon la revendication 4 en combinaison avec l'une des revendications 7 à 10, **caractérisée en ce qu'**il est prévu dans la ligne d'alimentation en courant de chauffage de la première barre collectrice (14a) un réseau d'alimentation (18) bloquant les courants à haute fréquence et la deuxième ligne d'alimentation en courant de chauffage de la barre collectrice (14b) est en liaison galvanique avec la masse du véhicule (3) et il est prévu à proximité d'au moins un des angles (7) sur la première barre collectrice (14a) un réseau à impédance à régulation électronique (6) et dans le tiers médian de la longueur de l'un des deux conducteurs de bord (12) les plus longs un point de connexion d'antenne (5) pour la connexion du réseau de connexion (4).

**13.** Antenne à diversité selon l'une des revendications 7 à 11 dans la vitre arrière d'un véhicule, **caractérisée en ce que**, pour des raisons d'alimentation séparée en courant de chauffage, il est prévu des champs de chauffage (20) situés les uns aux-dessus des autres et en séparation galvanique les uns des autres avec un écoulement horizontal du courant continu de chauffage ( 17) et, en vue de former une surface conductrice ( 1) active à haute fréquence aussi étendue que possible, les barres collectrices ( 14) des champs de chauffage (20) voisines les unes des autres dans le sens vertical sont reliées entre elles avec un dipôle ( 19) conducteur à haute fréquence.

**14.** Antenne à diversité selon la revendication 13, **caractérisée en ce qu'**un réseau à impédance à régulation électronique (6) est monté au moins à la place d'un dipôle (19) conducteur à haute fréquence.

**15.** Antenne à diversité selon l'une des revendications 1 à 14, **caractérisée en ce qu'**il est prévu dans le réseau à impédance à régulation électronique (6) au moins une porte de commande (22) pour le réglage de la valeur d'impédance efficace entre la première connexion HF (9) et la seconde connexion HF (10), de sorte que l'application de différents signaux de commande (23) crée des signaux d'antenne (21) différents dans le sens d'une diversité à la sortie du réseau de connexion (4).

**16.** Antenne à diversité selon l'une des revendications 1 à 15, **caractérisée en ce qu'**il est prévu dans le réseau à impédance à régulation électronique (6) au moins un élément de commutation électronique (24) à réglage numérique avec des états de commutation discrets, éventuellement relié à des réactances (25) pour le réglage de valeurs d'impédance discrètes et le réglage des valeurs d'impédance discrètes est obtenu par application d'un ou éventuellement plusieurs signaux de commande numériques (23) à la porte de commande (22) ou aux portes de commande (22).

**17.** Antenne à diversité selon l'une des revendications 1 à 16 associée à une installation de réception à diversité avec un processeur de diversité (31) pour la reconnaissance et l'affichage de perturbations de la réception dans le signal d'antenne (21) ou dans un signal de réception (37) dérivé de celui-ci à l'aide d'un signal indicateur (32), **caractérisée en ce qu'**il est prévu un dispositif de commutation (29) auquel est transmis le signal indicateur (32) et à la sortie duquel sont formés les signaux de commande (23) qui sont transmis aux réseaux à impédance à régulation électronique (6) par les lignes de commande (34),

et le dispositif de commutation (29) est conçu de telle sorte qu'en cas d'anomalie de la réception dans le signal d'antenne (21), un signal d'antenne (21) différent dans le sens d'une diversité est formé à l'entrée du réseau de connexion (4) par la valeur d'impédance d'au moins un des réseaux à impédance à régulation électronique (6),

et la modification du signal d'antenne (21) est poursuivie en coopération avec le processeur de diversité (31) jusqu'à ce que le processeur de diversité (31) n'indique plus d'anomalie.

**18.** Antenne à diversité selon la revendication 17, **caractérisée en ce qu'**il est prévu dans le réseau de connexion (4) un réseau d'adaptation (26) à commutation numérique sans pertes pour l'adaptation de l'impédance à l'impédance présente au point de connexion d'antenne (5) dans les différents états de commutation des réseaux à impédance à régulation électronique (6) sur la ligne d'antenne (27) allant au récepteur (30) ou sur les amplificateurs d'antenne (28) éventuellement présents dans le réseau de connexion (4),

et des signaux de commutation (33) servant à commander le réseau d'adaptation à commutation numérique (26) sont créés dans le dispositif de commutation (29) et transmis à ce réseau par les lignes de commande (34).

**19.** Antenne à diversité selon l'une des revendications 3 à 4 et l'une des revendications 7 à 18, **caractérisée en ce que** le point de connexion d'antenne (5) pour la connexion du réseau de connexion (4) est formé à l'extrémité supérieure de l'une des deux barres collectrices (14) et un premier point de connexion à impédance (8) est formé à l'autre extrémité de celle-ci et un second à l'extrémité supérieure de l'autre barre collectrice (14) pour la connexion d'un premier réseau à impédance à régulation électronique (6) et d'un second correspondant,

et **en ce que** le premier réseau à impédance à régulation électronique (6) est conçu pour le réglage numérique de trois valeurs d'impédance discrètes et le second réseau à impédance à régulation électronique (6) pour le réglage numérique de deux valeurs d'impédance discrètes.

20. Antenne à diversité selon la revendication 19, **caractérisée en ce que** la commande numérique des réseaux à impédance (6) forme au total quatre signaux d'antenne (21) à diversité différents, les combinaisons de valeurs d'impédance établies pour le premier réseau à impédance à régulation électronique (6) et le second étant les suivantes :

| N° de combinaison | Premier réseau | Second réseau |
|---|---|---|
| 1 | env. 50 ohms | haute impédance |
| 2 | haute impédance | haute impédance |
| 3 | haute impédance | basse impédance |
| 4 | basse impédance | basse impédance |

21. Antenne à diversité selon la revendication 20, **caractérisée en ce que** pour former une antenne AM et à diversité FM, il est prévu au-dessus de la surface conductrice (1) un conducteur d'antenne AM (35) pour la réception de signaux de radio AM et dans le réseau de connexion (4) un amplificateur AM (36) avec une connexion courte vers le conducteur d'antenne AM (35).

22. Antenne à diversité selon l'une des revendications 1 à 21, **caractérisée en ce qu'**il est en outre prévu dans le tiers médian de la longueur de la surface conductrice (1) sur l'un au moins des conducteurs de bord (12) les plus longs un point de connexion à impédance (8) avec un point de masse du véhicule (11) formé à proximité et un réseau à impédance à régulation électronique (6) qui lui est raccordé.

23. Antenne à diversité selon l'une des revendications 1 à 22, **caractérisée en ce que**, pour créer des points de masse du véhicule ( 11) ou le point de masse du véhicule (2), il est prévu le long du bord de la vitre de fenêtre, au moins au niveau de ces points de connexion, un conducteur (38) en forme de bande de longueur et de largeur suffisantes, qui forme avec le bord de la fenêtre de la carrosserie du véhicule une capacité suffisamment élevée pour permettre une connexion capacitive à la masse du véhicule (3).

24. Antenne à diversité selon les revendications 1 à 23, **caractérisée en ce que** les lignes de commande (34) qui transmettent les signaux de commande (23) aux réseaux à impédance à régulation électronique (6) sont des conducteurs ou des conducteurs multiples imprimés sur le verre.

25. Antenne à diversité selon l'une des revendications 1 à 24, **caractérisée en ce que** les éléments de commutation électroniques (24) sont conçus comme des diodes de commutation avec des états de commutation binaires, et le dispositif de commutation (29) est contenu dans le réseau de connexion (4) et conçu de façon telle que les signaux de commande (23) conviennent directement pour l'ouverture ou la fermeture des diodes de commutation.

26. Antenne à diversité selon l'une des revendications 1 à 24, **caractérisée en ce qu'**il est prévu un générateur de code (41) pour la production des signaux de commande (23) sous la forme d'un signal d'adresse numérique sur porteuse et **en ce que** le signal d'adresse contient les informations concernant le réglage de tous les réseaux à impédance à régulation électronique (6) et est transmis collectivement à ceux-ci par la surface conductrice (1), et il est prévu dans chacun des réseaux à impédance à régulation électronique (6) un circuit décodeur (40) pour la production des signaux nécessaires au réglage des éléments de commutation électroniques (24).

27. Antenne à diversité selon l'une des revendications 1 à 26, **caractérisée en ce qu'**une ligne d'alimentation électrique (44) est imprimée sur la vitre de fenêtre (39) et l'alimentation électrique nécessaire aux états passant et bloqué de l'élément de commutation électronique (24) passe par la ligne d'alimentation électrique (44) allant vers le réseau à impédance à régulation électronique (6).

28. Antenne à diversité selon la revendication 27, **caractérisée en ce que**, pour éviter les effets de migration, la ligne d'alimentation électrique (44) véhicule une tension de courant alternatif d'alimentation (47) avec une moyenne dans le temps négligeable en ce qui concerne la formation de tels effets, et la tension de courant alternatif d'alimentation (47) est produite par un onduleur (45) et il est prévu pour obtenir la tension de courant continu d'alimentation (48) nécessaire aux états passant et bloqué de l'élément de commutation électronique (24) un redresseur (46) dans le réseau à impédance à régulation électronique (6) et l'onduleur (45) est partiellement intégré dans le réseau de connexion (4).

29. Antenne à diversité selon l'une des revendications 1 à 28, **caractérisée en ce que**, pour le montage à impédance entre le point de connexion à impédance (8) et le point de masse du véhicule ( 11) avec l'impédance active (50), cette dernière est produite à l'aide d'une ligne à haute fréquence (51) à l'autre extrémité de laquelle est connectée l'impédance $\underline{Z}$ du réseau à impédance à régulation électronique (6) et la ligne à haute fréquence (51) est de préférence passée sur le bord de la vitre de fenêtre (39).

30. Antenne à diversité selon la revendication 29, **caractérisée en ce que** la ligne à haute fréquence (51) est réalisée comme un conducteur (52) imprimé sur la vitre de fenêtre (39), qui est parallèle à la masse du véhicule (3) et la séparation de courant continu (42) nécessaire entre la barre collectrice (14) et le conducteur de couplage à basse impédance (12a) est contenue dans le réseau à impédance à régulation électronique (6) avec les éléments produisant l'impédance $\underline{Z}$.

Fig. 1a

Fig. 1b

Fig. 1c

Fig. 2

Fig. 3a

Fig. 3b

Fig. 4

Fig. 5

Fig. 6

Fig. 7

Fig. 8

EP 1 076 375 B1

Fig. 9

Fig. 10

26

Fig. 11a

Fig. 11b

Fig. 12a

Fig. 12b

Fig. 13

Fig. 14

Fig. 15

Fig. 16

Fig. 17

Fig. 18

Fig. 19

Fig. 20

Fig. 21

EP 1 076 375 B1